Europäisches Patentamt

(19) European Patent Office

Office européen des brevets

(11) EP 0 637 537 B1

(12) **EUROPEAN PATENT SPECIFICATION**

(45) Date of publication and mention
of the grant of the patent:
**30.12.1998 Bulletin 1998/53**

(21) Application number: **94112136.0**

(22) Date of filing: **03.08.1994**

(51) Int. Cl.$^6$: **B62D 5/04**, B62D 6/00
// B62D101:00, B62D113:00,
B62D137:00, B62D151:00,
B62D153:00

(54) **Steering apparatus for vehicle**

Lenkungsanlage für ein Fahrzeug

Dispositif de direction pour véhicule

(84) Designated Contracting States:
**DE FR GB**

(30) Priority: **04.08.1993 JP 193286/93**

(43) Date of publication of application:
**08.02.1995 Bulletin 1995/06**

(73) Proprietor:
**AISIN SEIKı KABUSHIKı KAISHA
Kariya City Aichi Pref. (JP)**

(72) Inventors:
• **Watanabe, Tsukasa
Toyota-city, Aichi-ken (JP)**
• **Suzuki, Shuuetsu
Anjyo-city, Aichi-ken (JP)**
• **Goto, Takeshi
Toyota-city, Aichi-ken (JP)**
• **Fujita, Kozo
Nishikamo-gun, Aichi-ken (JP)**

(74) Representative:
**Pellmann, Hans-Bernd, Dipl.-Ing.
Patentanwaltsbüro
Tiedtke-Bühling-Kinne & Partner
Bavariaring 4
80336 München (DE)**

(56) References cited:
**EP-A- 0 528 200        EP-A- 0 531 962
WO-A-90/03910          DE-A- 4 200 477**

**Description**

The invention relates to a steering apparatus according to the preamble of claim 1. In particular it relates to a steering apparatus, in which wheels are steered by the power from an electric motor, and in particular, while not intended to be limited thereto, to an automatic steering mechanism of a so-called four wheel steering system for automobile in which auxiliary steering wheels (rear wheels) are driven by the power from an electric motor for steering purpose in association with the steering of main steering wheels (front wheels) of a vehicle.

In a typical arrangement of a steering apparatus of the kind described, a rotating power from an electric motor is transmitted, with a speed reduction through worm and wheel, to a pinion, which in turn linearly drives an output rack or operating shaft in order to drive wheels for steering purpose (for example, Japanese Laid-Open Utility Model Application No. 176,578/1989 or Japanese Laid-Open Patent Application No. 164,382/1991). A high reduction ratio through the worm and wheel is utilized in an attempt to develop a driving force of a greater magnitude from an electric motor of a relatively low power level, but because the power is transmitted through the worm and wheel substantially through a sliding contact, soft metals such as phosphor bronze, aluminum bronze or the like are used for the wheels in order to prevent brazure. This generally results in a low level of fatigue strength of the tooth surface, requiring extreme cares to be exercised in maintaining lubrication requirements and the tooth surface and assembly accuracy. To withstand greater forces, it is also necessary to provide an increased area of contact between the worm and wheel, by increasing the depth of meshing engagement therebetween so that the gear on the wheel wraps the worm. This results in a reduction in the power transmitting efficiency, which means that an electric motor of a greater power and a greater size is required. Since a steering apparatus is disposed between the pair of rear wheels so as to extend in the lateral direction of a vehicle, it follows that the space in which the steering apparatus is disposed is generally open in the lateral direction, but is restricted in the fore-and-aft direction of the vehicle. Accordingly, the size of the steering apparatus as viewed in the fore-and-aft direction of the vehicle must be reduced. From such point of view, there is proposed a steering apparatus in which a hypoid gear is fixedly mounted on an output pinion which meshes with an output rack, and in which the hypoid gear is driven for rotation by an electric motor through a pinion (for example, Japanese Laid-Open Patent Application No. 162,653/1993).

In such a steering apparatus, when a failure or a malfunctioning of a controller which energizes the electric motor occurs, the motor ceases to be energized. There is no substantial problem if the steering apparatus stops its operation at a neutral steer angle. However, when the energization is interrupted at a certain steer angle, the rear wheels remain as steered. In order to avoid this, there is proposed a steering apparatus in which a return spring is used to urge the output rack to its neutral position by interposing a clutch between the output rack and the drive mechanism or by utilizing a drive mechanism which can be driven in both directions by allowing an output rotating shaft to rotate in response to a movement of the output rack. If the controller fails, the clutch may be disengaged, whereupon the return spring is effective to return the output rack to its neutral position.

When a return spring is used, the rear wheels must be steered against the resilience of such spring. As a result of this, the electric motor involved a large power loss, and a battery of a greater capacity than usual is mounted on the vehicle. When the battery of a greater capacity is used, the weight of the battery increases, with consequent degradation in the accelerating or decelerating performance or the fuel cost of the vehicle. Steering the rear wheels against the resilience of the return spring also degrades the manoeuvrability of the rear wheels. If the return spring is eliminated, for a steering apparatus employing a drive mechanism in which the output rack can be driven from the motor, but which inhibits a drive in the reverse direction, as the energization of the motor is interrupted in response to any abnormality in the controller or the like, there results the problem that the rear wheels remain as steered. For a steering apparatus in which the output rack is capable of reversely driving the drive mechanism when the energization of the motor is interrupted, upon interruption of the energization of the motor in response to any abnormality in the controller or the like, it is possible that the wheels be returned to their neutral positions by a restoring force applied to the wheels from a road surface, but a steering operation requires an increased torque from the motor which overcomes a force applied to the wheels from the road surface (which may be impact-like at times), requiring an electric motor of an increased size.

From the EP-A-0528200, a steering device is known which is designed for steering front wheels. This document discloses a ball thread coupling which connects a hollow shaft of a brushless electric motor to the operating shaft for steering the front wheels. The ball thread coupling allows not only the rotation of the hollow shaft by the motor for steering but also the rotation of the hollow shaft by the translation of the operating shaft which results from an application of a force from the front wheels. Even if the energization of the motor is stopped in response to any abnormality, the steering wheel returns to the neutral position by the reset force coming from the front wheels.

From the WO 90/3910 a similar steering device is known, on which the preamble of claim 1 is based, which comprises a ball thread coupling which connects the hollow shaft of the electric motor with the operating shaft for steering rear wheels. A separate locking device is used in order to avoid a rotation of the hollow shaft due to the translation of the operating shaft by an application of a force coming from the rear wheels.

It is an object of the invention to provide a steering apparatus which is compact in configuration, requires less torque from the motor, and which substantially eliminates any movement of an operating shaft which results from a force applied from wheels to the shaft when the motor is deenergized, and a further object is to provide a steering apparatus which enables the provision of a return spring to be eliminated while enabling a return to a neutral position, in addition to the above features.

This object is solved by a steering apparatus according to claim 1. Further improvements thereof are the subject-matters of the appended dependent claims.

When a motor driver (5, 6) energizes an electric motor (12), the hollow rotating shaft (27) of the electric motor (12) rotates, whereby a trapezoidal female thread (27sf) which is integral with the hollow rotating shaft (27) rotates. This rotation causes a trapezoidal male thread (26sm) which is threadably engaged with the trapezoidal female thread (27sf) to move in a direction in which the hollow rotating shaft (27) extends. Thus, the operating shaft (25) which is integral with the trapezoidal male thread (26sm) moves in the direction in which the hollow rotating shaft (27) extends. By connecting the opposite ends of the operating shaft (25) to left and right wheels, respectively, in the similar manner as occurs in a conventional arrangement, the above movement of the operating shaft (25) allows left and right wheels to be steered.

Since the operating shaft (25) extends through the hollow rotating shaft (27) of the electric motor, in the steering apparatus according to the invention, the size (width) as measured in the direction orthogonal to the operating shaft (25) can be minimized, and a resulting reduction in the output torque can be compensated for by choosing an increased size of the electric motor in a direction in which the operating shaft (25) extends, whereby the steering apparatus may be made as a smaller diameter unit centered about the operating shaft (25).

With the trapezoidal thread coupling (27sf/26sm), a relative rotation between the female thread (27sf) and the male thread (26sm) enables the both to be translated relative to each other in their axial direction, thereby allowing a steering operation to be performed in the manner mentioned above. However, if a relative force is applied between the both (27sf/26sm) in the axial direction, neither one of them (27sf/26sm) rotates, and when one of the both (27sf/26sm) is fixed in the direction in which its axis extends, the both (27sf/26sm) does not move in that direction. Accordingly, in the steering apparatus of the invention, any force applied from the wheels to the operating shaft (25) in a direction in which the operating shaft (25) is translatable, cannot cause an increase in the load upon the electric motor. Hence, the torque which is required for the steering operation need not be increased, while any movement of the operating shaft (25) which may be caused by a force applied from the wheels to the operating shaft (25) when the electric motor is deenergized can be blocked by the trapezoidal thread coupling (27sf/26sm).

When such steering apparatus is not provided with the clutch and the return spring mentioned above, there is a likelihood that the rear wheels may remain as steered when the energization of the electric motor is interrupted in response to any abnormality occurring in the controller or the like, as mentioned above. Accordingly, in a preferred embodiment of the invention, the brushless electric motor (12) comprises a rotor formed by a magnet (42) fixedly mounted on a hollow rotating shaft (27) and having N- and S-poles which are alternately distributed in the circumferential direction; a stator including a cylindrical yoke (43) which surrounds the outer peripheral surface of the rotor, a plurality of magnetic poles (43a) which projects from the yoke (43) toward the rotor and a plurality of electric coils (44a ~ 44f) which excite the magnetic poles (43a); and a magnetic pole sensor (18) for detecting an angle of relative rotation of the rotor with respect to the stator. There are provided six electric coils which are connected in three-phase, two circuits, so that each circuit may be independently energized. At this end, two motor drivers (5, 6) are provided to energize the electric coils of each circuit.

In the preferred embodiment, when the energization of electric coils in one circuit is interrupted as a result of a failure or abnormality occurring in one circuit of the electric coils of the electric motor (12), in one motor driver (5) or its controlling controller, the other motor driver (6) can be used to energize the electric coils of the second circuit to perform a steering operation or a return to a neutral steer angle. Thus, in the event of occurrence of a failure in a system which energizes one circuit for rotation, it is possible to avoid a situation that the rear wheels remain as steered.

Other objects and features of the invention will become apparent from the following description of an embodiment thereof with reference to the drawings.

BRIEF DESCRIPTION OF THE DRAWINGS

Fig. 1 shows a longitudinal section of main part of a mechanism according to one embodiment of the invention;
Fig. 2 shows an enlarged longitudinal section of a threaded portion E2 shown in Fig. 1;
Fig. 3 shows an enlarged cross section taken along the line 3A-3A shown in Fig. 1;
Fig. 4 shows a transverse section taken along the line 6A-6A shown in Fig. 1, and viewed in a direction opposite to the direction of an arrow, illustrating the distribution of electric coils 44 of the motor shown in Fig. 3;
Fig. 5 shows an enlarged cross section taken along the line 6A-6A shown in Fig. 1;
Fig. 6 shows a timing chart showing the relationship between the angle of rotation of a magnet 42 of a brushless motor 12 shown in Fig. 1 and a signal which energizes electric coils;
Fig. 7 shows a block diagram showing the arrangement of a rear wheel steering system in which one embodiment of the invention is incorporated;

Fig. 8 shows a block diagram showing the arrangement of an electronic controller 9 shown in Fig. 7;

Fig. 9 shows a block diagram showing the arrangement of a driver 5 shown in Fig. 8;

Fig. 10 shows a block diagram showing the arrangement of a selector 4 shown in Fig. 8;

Fig. 11 shows a block diagram showing a functional arrangement of microprocessors 1 and 2 shown in Fig. 8;

Fig. 12 shows a block diagram showing a functional arrangement of a target steer angle calculation 60 shown in Fig. 11;

Fig. 13 shows a block diagram showing a functional arrangement of a motor servo control 61 shown in Fig. 11;

Fig. 14 shows an electrical circuit diagram showing an input circuit for a magnetic pole sensor contained in an interface 57 shown in Fig. 8;

Fig. 15 shows a flow chart showing the content of a magnetic pole sensor abnormality determination 63 shown in Fig. 11;

Fig. 16 shows a flow chart showing the content of a phase switching control 62 shown in Fig. 11;

Fig. 17 shows a flow chart showing the content of an open control 64 shown in Fig. 11;

Fig. 18 shows a flow chart showing the content of a CPU monitoring (a second microprocessor monitoring) shown in Fig. 11;

Fig. 19 shows a flow chart showing the content of CPU monitoring (a first microprocessor monitoring) shown in Fig. 11;

Fig. 20 shows a flow chart showing the content of operation of a backup microprocessor 3 shown in Fig. 8; and

Fig. 21 shows a timing chart showing input and output signals of brake signal generators 67, 68 shown in in Fig. 8.

## DESCRIPTION OF A PREFERRED EMBODIMENT

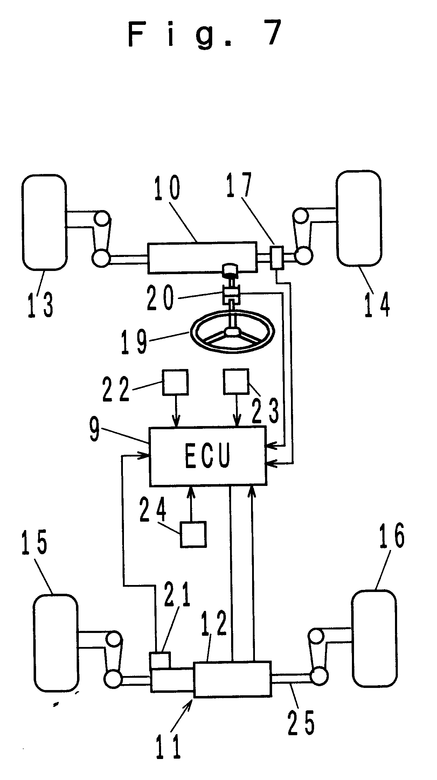

Fig. 7 shows the arrangement of a front and rear wheel steering system of a vehicle having one embodiment of the invention mounted onboard. Front wheels 13, 14 are steered by means of a front wheel steering device 10 in response to a turning operation of a steering wheel 19. A steering angle by which the front wheels are steered is detected by a first front wheel steer angle sensor 17 which detects a travel of a rack (which is an operating shaft to drive the front wheels for steering) of the front wheel steering device 10, and by a second front wheel steer angle sensor 20 mounted on a steering shaft on which the steering wheel 19 is mounted. The first front wheel steer angle sensor 17 comprises, for example, a linear sensor such as a potentiometer while the second front wheel steer angle sensor 20 comprises a steering sensor such as a rotary encoder which produces pulses upon rotation.

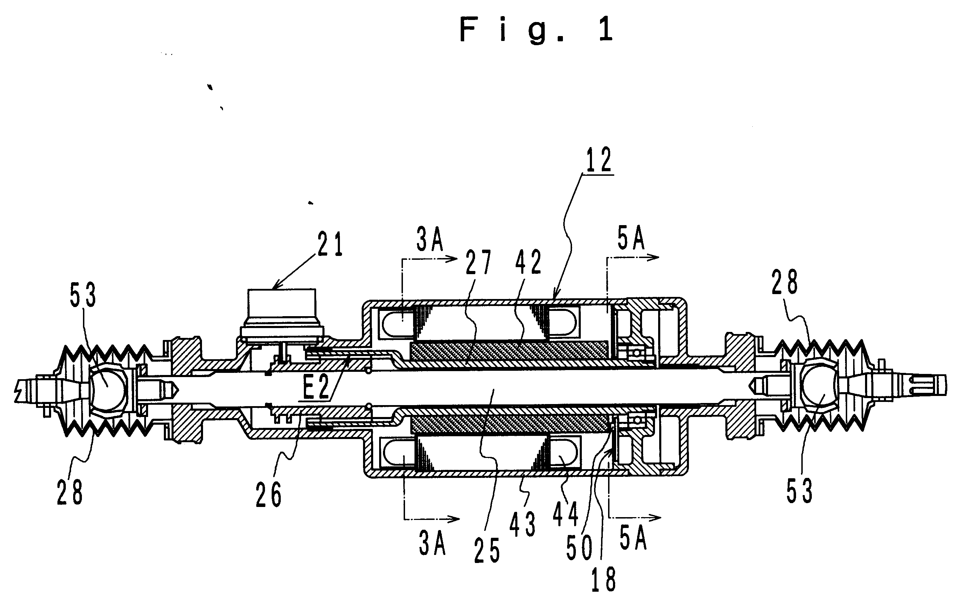

Rear wheels 15, 16 are steered by a rear wheel steering mechanism 11, which comprises the essential part of the embodiment of the invention. The rear wheel steering mechanism 11 is powered from a brushless motor 12. A magnetic pole sensor 18 (Fig. 1) which detects an angle of rotation of the motor 12 is mounted on the end of the motor 12. Also, a rear wheel steering angle sensor 21 which detects the actual steer angle of the rear wheels 15, 16 is coupled to an operating shaft 25 which drives the rear wheels for steering.

In addition, a first and a second vehicle speed sensor 22, 23, which form two circuits, for detecting the speed of the vehicle, and a yaw rate sensor 24 which determines the yaw rate of the vehicle are mounted on the vehicle.

The motor 12 is controlled by a signal from an electronic controller 9, which receives sensor outputs from the first front wheel steer angle sensor 17, the second front wheel steer angle sensor 20, the magnetic pole sensor 18, the rear wheel steering sensor 21, the first vehicle speed sensor 22, the second vehicle speed sensor 23 and the yaw rate sensor 24 for calculating a required steer angle for the rear wheels which corresponds to the steer angle of the front wheels and the running condition of the vehicle and for driving the motor 12 so as to achieve the required steer angle.

An essential part of the rear wheel steering mechanism 11 is shown in Fig. 1. At its opposite ends, the operating shaft 25 which is disposed at right angles to the direction in which the vehicle proceeds is connected with a knuckle arm (not shown) of the rear wheel through a ball joint 53. The opposite ends of the operating shaft 25 are protected by boots 28.

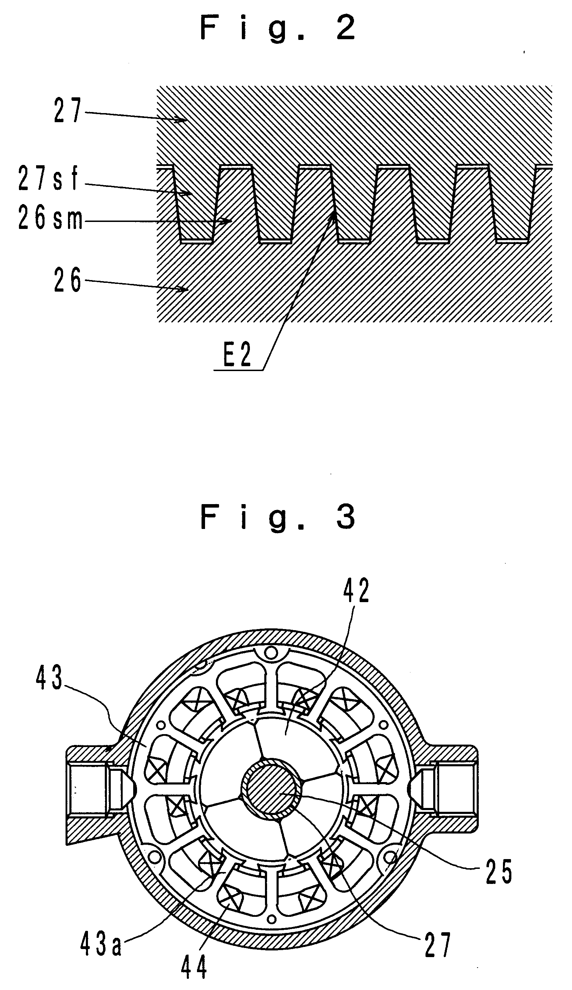

The operating shaft 25 extends through a hollow rotating shaft 27 of the brushless motor 12. A substantially cylindrical male thread member 26 is fixedly mounted on the operating shaft 25. The hollow rotating shaft 27 includes a portion E2 which bulges to a larger diameter, the inner peripheral surface of which is formed with a trapezoidal female thread 27sf (Fig. 2), and on its outer peripheral surface in a region where the male thread member 26 has a greater diameter, the member 26 is formed with a trapezoidal male thread 26sm (Fig. 2) which threadably engages with the trapezoidal female thread 27sf. These trapezoidal female and male threads 27sf, 26sm threadably engage each other in a region shown at E2 in Fig. 1. The region E2 is shown to an enlarged scale in Fig. 2.

Returning to Fig. 1, the male thread member 26 which is fixedly and integrally mounted on the operating shaft 25 is engaged by the tip of a radially extending arm which is secured at its one end to the rotating shaft of the rear wheel steer angle sensor 21, which comprises a rotary potentiometer. The rotating shaft of the rear wheel steer angle sensor 21 is offset from the axis of the operating shaft 25 by an amount substantially corresponding to the length of the arm, as measured in a direction perpendicular to the plane of drawing of Fig. 1. As a consequence, as the operating shaft 25 moves fore and aft in its axial direction (the direction in which it is driven for purpose of steering), the rotating shaft of the rear wheel steer angle sensor 21 rotates forwardly and reversely, and the level of an output signal from the rear wheel steer angle sensor 21 corresponds to the position (the steer angle of rear wheels) of the operating shaft 25.

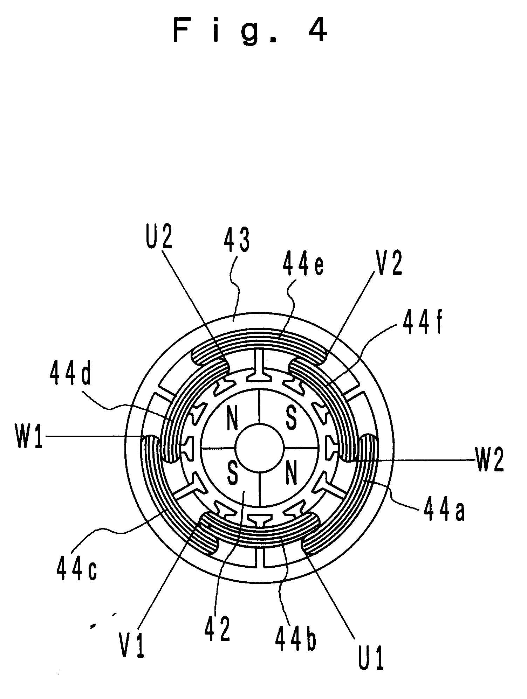

The hollow rotating shaft 27 of the motor 12 extends through and is secured to a cylindrical magnet 42 having four poles. A substantially cylindrical yoke 43 of magnetizable material surrounds the peripheral surface of the magnet 42, and magnetic poles 43a (Fig. 3) project from the yoke 43 of magnetizable material toward the magnet 42, the magnetic poles 43a carrying electric coils 44.

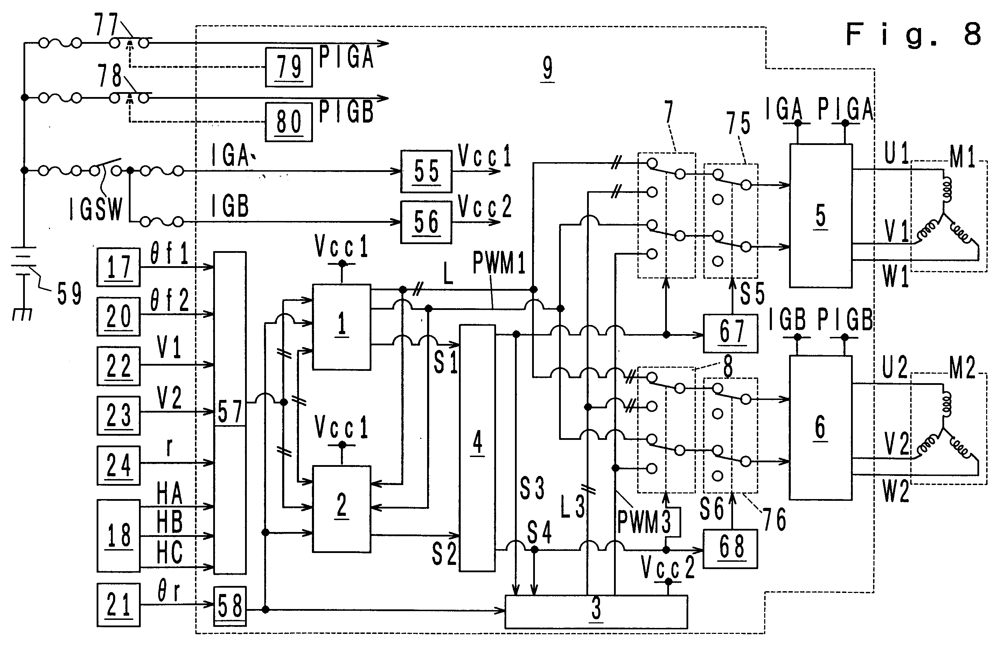

Fig. 3 shows a cross section taken along the line 3A-3A shown in Fig. 1. The yoke 43 has twelve magnetic poles 43a which project toward the magnet 42, and each of the electric coils 44 is wound around a group of magnetic poles comprising three projections as one unit. The manner of winding of the electric coils 44 is shown in Fig. 4, which illustrates the electric coils 44 as viewed from the side of the magnetic pole sensor 18 (Fig. 1). The electric coils 44 are wound in six phases, with one half thereof, or three phases being connected in one circuit, thereby providing two circuits. Electric coils 44a, 44b, 44c belong to a first circuit, and the electric coils 44d, 44e, 44f belong to a second circuit. The electric coils 44a, 44b, 44c, 44d, 44e and 44f define terminals U1, V1, W1, U2, V2 and W2, respectively, at their one end, which are separate from each other while the electric coils 44a, 44b, 44c are electrically connected together at their other end as are the electric coils 44d, 44e, 44f. In this manner, the motor 12 defines a three-phase, four-pole, two-circuit brushless motor (M1 + M2), and accordingly, if one circuit fails to operate as a result of a failure, the other circuit is effective to rotate the motor. When the two circuits are operated simultaneously, any reduction in the power is avoided. The electric coils 44 are connected, according to their circuit arrangement, to motor drivers 5, 6 (Fig. 8) through terminals and wire harness. M1 and M2 shown in Fig. 8 represent the respective circuits of the motor 12.

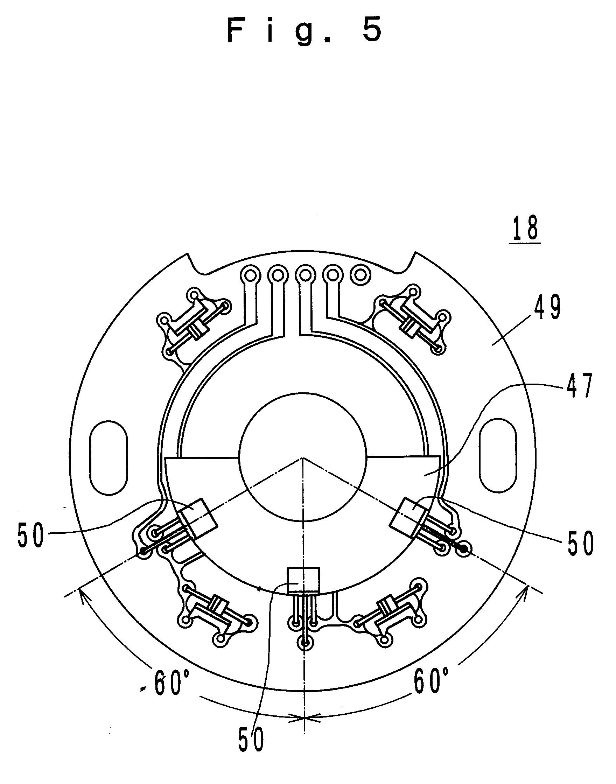

The magnetic pole sensor 18 shown in Fig. 1 is more specifically illustrated in Fig. 5. A substrate 49 includes a holder 47, which is secured to a motor housing. Three Hall IC's 50 are mounted on the substrate 49. As shown in Fig. 5, three Hall IC's 50 are disposed at an angular interval of 60° therebetween on the substrate 49. Outputs from the three Hall IC's 50 are used as magnetic pole signals HA, HB, HC in the electronic controller 9 (Fig. 8) to be described later.

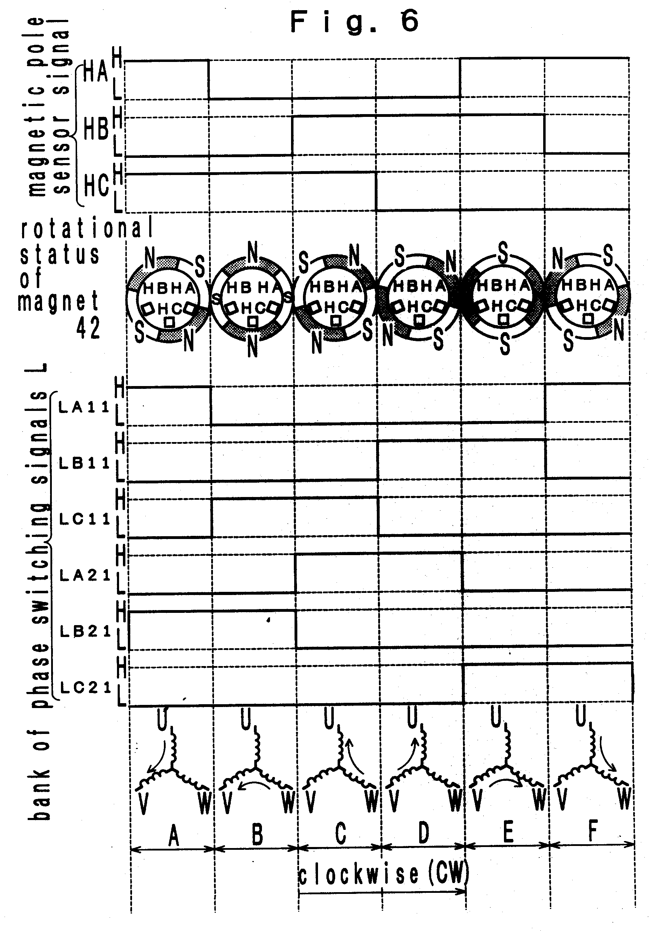

When the hollow rotating shaft 27 (hereafter referred to as motor shaft 27) of the motor 12 rotates, the magnet 42 rotates relative to the Hall IC's 50, changing the magnetic pole signals HA, HB, HC, which are three outputs from the magnetic pole sensor 18, between a high level (H) and a low level (L) as shown against the status of rotation of the magnet 42 depicted in Fig. 6. Fig. 6 illustrates a clockwise (CW) rotation of the rotor of the motor 12. For a counter-clockwise (CCW) rotation of the rotor of the motor 12, the magnetic pole signals HA, HB, HC from the magnetic pole sensor 18 changes from right to left as viewed in this Figure. When the current flow through each of the electric coils 44 is switched in synchronism with such change in the magnetic pole signals HA, HB, HC, the magnet 42 or rotor rotates. The current flow which occurs when driving the motor for rotation will be described later.

Fig. 8 shows the arrangement of the electronic controller 9 shown in Fig. 1. The electronic controller 9 is connected to an onboard battery 59, which is in turn connected to a power supply terminal PIGA through a fuse and a relay 77 and also connected to a power supply terminal PIGB through a fuse and a relay 78. The relays 77 and 78 are opened and closed by relay drive circuits 79 and 80, respectively. The battery 59 is also connected through a fuse and an ignition switch IGSW to power supply terminals IGA, IGB, which are in turn connected to a first and a second constant voltage regulator 55, 56, respectively. The first constant voltage regulator 55 outputs a constant voltage Vcc1, and the second constant voltage regulator 56 outputs a constant voltage Vcc2.

The electronic controller 9 comprises a first and a second microprocessor 1, 2, which form the primary control means, and a backup microprocessor 3, which forms the secondary control means, thus three microprocessors in all. The first and the second microprocessor 1, 2 are operated by the constant voltage Vcc1 while the backup microprocessor 3 is operated by the constant voltage Vcc2. Outputs from the first front wheel steer angle sensor 17, the second front wheel steer angle sensor 20, the first vehicle speed sensor 22, the second vehicle speed sensor 23, the yaw rate sensor 24 and the magnetic pole sensor 18 mentioned previously are input through an interface 57 to the first and the second microprocessor 1, 2, respectively. An output from the rear wheel steer angle sensor 21 is input through an interface 58 to the first, the second and the backup microprocessor 1, 2, 3. The outputs from the first front wheel steer angle sensor 17, the second front wheel steer angle sensor 20, the first vehicle speed sensor 22, the second vehicle speed sensor and the yaw rate sensor 24 are denoted by $\theta f1$, $\theta f2$, $V1$, $V2$ and r, respectively, and the three outputs from the magnetic pole sensor 18 are denoted as HA, HB, HC while the output from the rear wheel steer angle sensor 21 is denoted by $\theta r$.

As mentioned previously, the electronic controller 9 controls the three-phase, two-circuit brushless motor 12. The two circuits of the motor 12 are designated as M1, M2 (motor 12 = motor M1 + motor M2). Phase terminals U1, V1, W1 of the motor M1 are connected to the first motor driver 5 of the electronic controller 9 while the phase terminals U2, V2, W2 of the motor M2 are connected to the second motor driver 6 of the electronic controller 9.

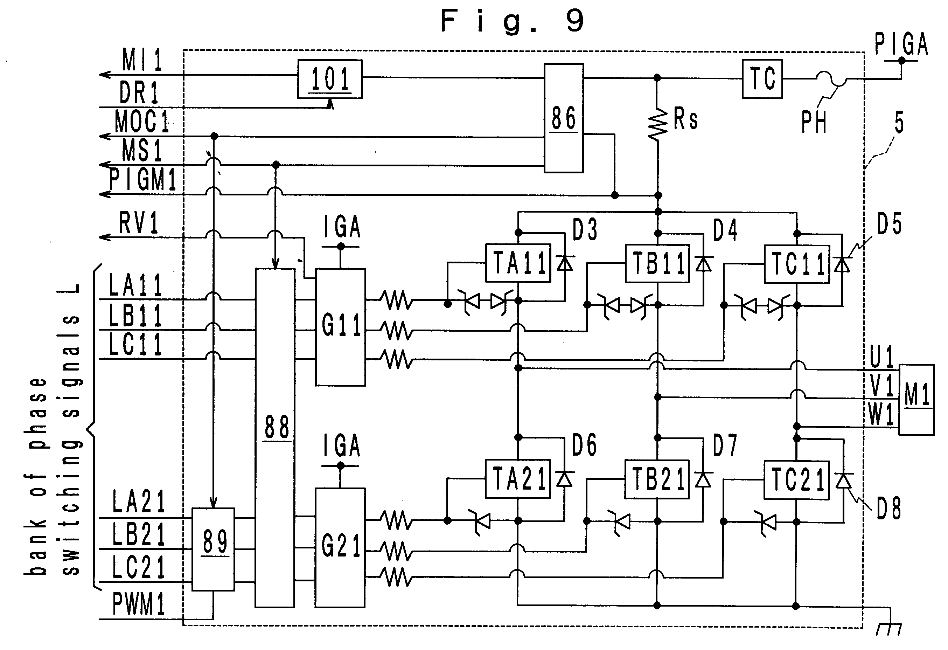

The first motor driver 5 will be described in detail with reference to Fig. 9. The first motor driver 5 is controlled by a bank L of phase switching signals LA11, LB11, LC11, LA21, LB21, LC21, and a pulse width modulation signal PWM1.

The phase switching signals LA11, LB11, LC11, which control the connection between the terminals U1, V1, W1 and the positive terminal of the power supply, are input to a gate drive circuit G11 through an abnormal current limiting circuit 88, which normally delivers an input signal without change. The gate drive circuit G11 turns transistors TA11, TB11, TC11, which are power MOSFET's, on and off. The gate drive circuit G11 also performs a booster action, and applies a boosted voltage to the gates of the transistors TA11, TB11, TC11. Simultaneously, the gate drive circuit G11 outputs the boosted voltage as a boosted voltage value RV1. The transistors TA11, TB11, TC11 selectively apply a high voltage, which is obtained from the power supply terminal PIGA through a printed pattern fuse PH, a choke coil TC and resistor Rs, to the three phase terminals U1, V1, W1 of the motor M1. A Zener diode is connected across the gate and the source of each transistor TA11, TB11, TC11, TA21, TB21, TC21 in order to protect the power MOSFET's because in the event the supply voltage exceeds 20 V for some reason, the voltage across the gate/source of the power MOSFET will exceed 20 V to cause a destruction of the power MOSFET, which must be prevented. In this instance, the relays 79, 80 (Fig. 8) are also turned off, thus turning the drive signal to the transistors off for purpose of circuit protection. On the other hand, the phase switching signals LA21, LB21, LC21, which control the connection between the terminals U1, V1, W1 and the negative terminal of the power supply, are input to a gate drive circuit G21 through a pulse width modulation signal synthesizing circuit 89 and the abnormal current limiting circuit 88. The pulse width modulation signal synthesizing circuit 89 synthesizes the phase switching signals LA21, LB21, LC21, respectively, with the pulse width modulation signal PWM1. The gate drive circuit G21 turns the transistors TA21, TB21, TC21, which are MOSFET's, on and off. These transistors TA21, TB21, TC21 selectively connect the three phase terminals U1, V1, W1 of the motor M1 with the ground terminal of the battery 59. Protective diodes D3 ~ D8 are connected across the respective transistors TA11, TB11, TC11, TA21, TB21, TC21. A voltage applied to the transistors TA11, TB11, TC11 is also output as a voltage PIGM1. When a difference between the voltage PIGM1 and the boosted voltage value RV1 from the gate drive circuit G11 is reduced to the order of 2 V, the on-resistance of MOSFET transistors TA11, TB11, TC11, TA21, TB21, TC21 increases, and such increase may cause an abnormal heating. Accordingly, when the difference between the voltage PIGM1 and the boosted voltage value RV1 from the gate drive circuit G11 is reduced to or below a given value, all the transistors TA11, TB11, TC11, TA21, TB21, TC21 are turned off. An electrical circuit which is used at this end is not illustrated. Since there is a large current flow to the sources of the transistors TA21, TB21, TC21 which are connected to the ground, such ground connection is made separately from the ground connection of the electric circuit such as the microprocessors.

A current detection circuit 86 is connected across the resistor Rs to detect a current flow through the resistor Rs. The current detection circuit 86 determines the occurrence of an overcurrent when the value of current flow through the resistor Rs is equal to or greater than 18 A, changing its output signal MOC1 to a level which represents an overcurrent. The current detection circuit 86 also determines the occurrence of an abnormal current when the value of current flow through the resistor Rs is equal to or greater than 25 A, and changes its output signal MS1 to a level which represents an abnormal current. In the event an overcurrent occurs, the pulse width modulation signal synthesizing circuit 89 reduces the duty cycle of pulse width modulated energization applied to the transistors TA21, TB21, TC21. In the event an abnormal current occurs, the abnormal current limiting circuit 88 reduces the duty cycle of pulse width modulated energization applied to the transistors TA11, TB11, TC11, TA21, TB21, TC21. Specifically, all the transistors TA11, TB11, TC11, TA21, TB21, TC21 are turned off for a given time interval upon detection of the abnormal current. The length of the given time interval is chosen to provide a region of safe operation of FET's for a maximum current which is expected in the circuit design.

The value of the current detected by the current detection circuit 86 is applied to a peak hold circuit 101, which delivers it as a peak signal MI1. The peak hold circuit 101 is reset by a reset signal DR1.

Returning to Fig. 6, the rotating operation of the motor M1 will be described. The motor M1 rotates when the pattern of the phase switching signals is chosen as shown in Table 1 in accordance with the status of the magnetic pole signals HA, HB, HC. A clockwise rotation (CW) corresponds to a right turn steering, and a counter-clockwise rotation (CCW) corresponds to a left turn steering. Assume that the magnetic pole signals are such that (HA, HB, HC) = (H, L, H), as indicated at step No. 1 for the right turn in Table 1. At this time, phase switching signals (LA11, LB11, LC11, LA21, LB21, LC21) = (H, L, L, L, H, L) are delivered. This condition corresponds to a range A shown in Fig. 6. As indicated for the status of rotation of the magnet 42, the three Hall IC's provides a high level for the magnetic pole signals HA and HC. The direction of current flow through the winding is from U to V, and at this time, the rotor of the motor or the magnet 42 rotates clockwise. When the magnet 42 rotates through 30°, the magnetic pole signal HA changes from a high to a low level. Accordingly, the phase switching signals are changed to (LA11, LB11, LC11, LA21, LB21, LC21) = (L, L, H, L, H, L), whereupon the motor continues to rotate. In this manner, in order to achieve a clockwise (CW) or a counter-clockwise (CCW) rotation of the motor, the levels of the phase switching signals may be changed in the sequence of steps No. 1 ~ 6 shown in Table 1.

Table 1

| wheel steering | step No. | HA | HB | HC | LA11 | LB11 | LC11 | LA21 | LB21 | LC21 |
|---|---|---|---|---|---|---|---|---|---|---|
| right turn | 1 | H | L | H | H | L | L | L | H | L |
| | 2 | L | L | H | L | L | H | L | H | L |
| | 3 | L | H | H | L | L | H | H | L | L |
| | 4 | L | H | L | L | H | L | H | L | L |
| | 5 | H | H | L | L | H | L | L | L | H |
| | 6 | H | L | L | H | L | L | L | L | H |
| left turn | 1 | H | L | H | L | H | L | H | L | L |
| | 2 | H | L | L | L | L | H | H | L | L |
| | 3 | H | H | L | L | L | H | L | H | L |
| | 4 | L | H | L | H | L | L | L | H | L |
| | 5 | L | H | H | H | L | L | L | L | H |
| | 6 | L | L | H | L | H | L | L | L | H |

It is to be understood that the second motor driver 6 is similarly constructed as the first motor driver 5. The second motor driver 6 energizes the three phase terminals U2, V2, W2 of the motor M2.

Any failure in the motor 12 (= M1 + M2) can be detected by a peak value from the peak hold circuit 101, in addition to by the detection of any abnormal current mentioned above. Since there is a current flow in the motors M1 and M2 across any one of U-V phase, V-W phase and W-U phase, if the current flowing through the motor has its peak value held at every phase switching, the peak value should always be at a same level. However, if a breakage occurs in the U-phase, for example, there occurs no current flow across U-V phase or W-U phase, and the current will exhibit a high peak value only during the time the current flows across V-W phase. On the other hand, if the U-phase is short-circuited, the magnitude of the current flow will be doubled across U-V phase or across W-V phase while the current will exhibit a reduced peak value when the current flows across the V-W phase. Accordingly, it may be concluded that there is some abnormality in some phase unless the peak value remains at the same level for three consecutive phase switchings. It is also possible to estimate the motor current from the speed of rotation of the motor and the duty cycle of the PWM energization. In the event the peak value which is held is offset from this estimate, it may be concluded that there is some abnormality of the motor.

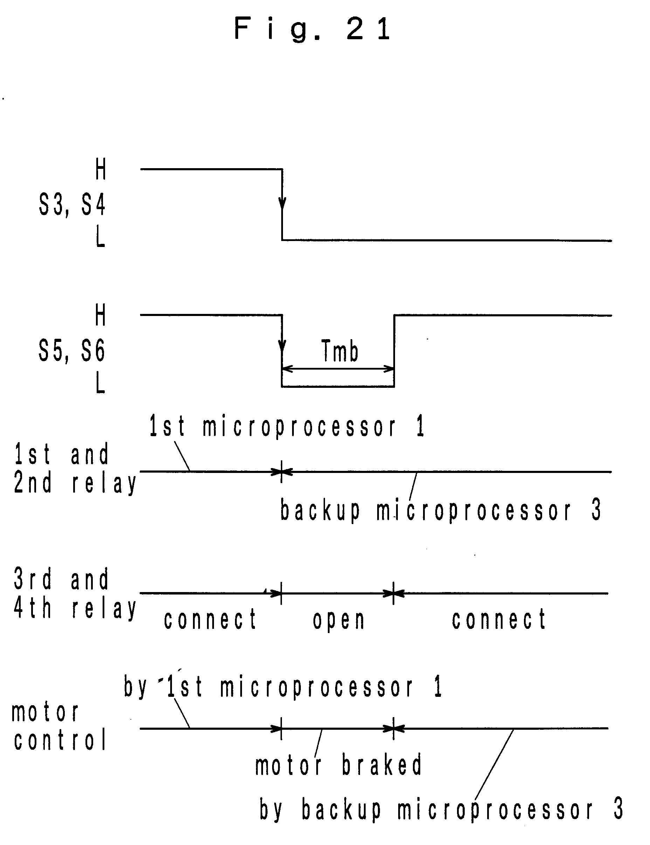

Referring to Fig. 8, the first motor driver 5 is fed from the power supply terminals PIGA and IGA. The first relay 7 is connected through a third relay 75 to the input of the first motor driver 5. The first relay 7 delivers to the third relay 75 either the bank of phase switching signals L (comprising signals LA11, LB11, LC11, LA21, LB21, LC21) and the pulse width modulation signal PWM which are output from the first microprocessor 1 or the bank of phase switching signals L3 (comprising phase switching signals LA11, LB11, LC11, LA21, LB21, LC21) and the pulse width modulation signal PWM3 which are output from the backup microprocessor 3. The third relay 75 provides a connection/interruption between the first relay 7 and the first motor driver 5. The first relay 7 is switched by a signal S3 from a selector 4 while the third relay 75 is controlled by a signal S5 from a brake signal generator 67. As shown in Fig. 21, the brake signal generator 67 changes the signal S5 to its low level for a given time interval Tmb whenever the signal S3 from the selector 4 is changed to its low level, thus interrupting the third relay 75. When the third relay 75 is interrupted, the banks of phase switching signals L, L3 and the pulse width modulation signals PWM, PWM3 are not applied to the first motor driver 5, and the motor M1 is braked. After the given time interval Tmb, the third relay 5 is closed again, but at this time, the first relay 7 is switched to its connection with the backup microprocessor 3, whereby the motor 12 is controlled by the backup microprocessor 3.

Similarly, the phase terminals U2, V2, W2 of the motor M2 are connected to the second motor driver 6 of the electronic controller 9. The second motor driver 6 is fed from the supply terminals PIGB and IGB. The second relay 8 is connected through a fourth relay 76 to the input of the second driver 6. The second relay 8 delivers to the fourth relay 76 either the bank of phase switching signals L and the pulse width modulation signal PWM which are output from the first microprocessor 1 or the bank of phase switching signals L3 and the pulse width modulation signal PWM3 which are output from the backup microprocessor 3. The fourth relay 76 provides a connection/interruption between the second relay 8 and the second motor driver 6. The second relay 8 is switched by a signal S4 from the selector 4 while the fourth relay 76 is controlled by a signal S6 from a brake signal generator 68. As shown in Fig. 21, the brake signal generator 68 changes the signal S5 to its low level for a given time interval Tmb whenever the signal S4 from the selector 4 changes to its low level, thus interrupting the relay 76. When the relay 76 is interrupted, the banks of phase switching signals L, L3 and the pulse width modulation signals PWM, PWM3 are not applied to the second motor driver 6, whereby the motor M2 is braked. After the given time interval Tmb has passed, the fourth relay 76 is closed again, but at this time the second relay 8 is switched to its connection with the backup microprocessor 3, whereby the motor 12 is controlled by the backup microprocessor 3.

The selector 4 receives a signal S1 from the first microprocessor 1 and a signal S2 from the second microprocessor 2, and delivers the signals S3 and S4 to the first and the second relay 7 and 8, respectively. The signals S3 and S4 are also fed to the backup microprocessor 3.

The second microprocessor 2 intercepts the bank of phase switching signals L and the pulse width modulation signal PWM which are output from the first microprocessor 1. The second microprocessor 2 also transmits data to and receives data from the first microprocessor 1.

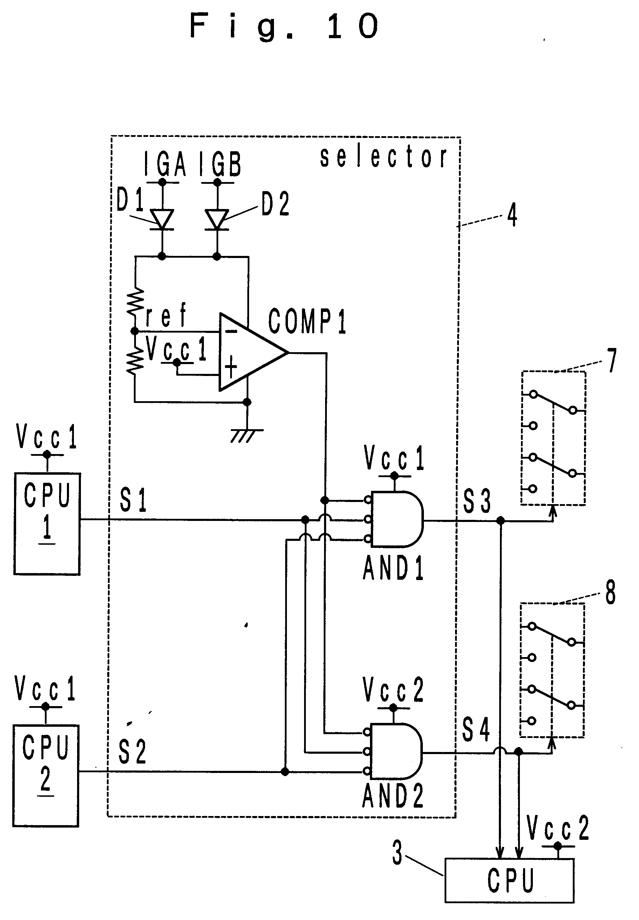

The arrangement of the selector 4 is shown in Fig. 10. The selector 4 includes a comparator COMP1 which monitors the supply voltage. The comparator COMP1 is fed from the supply terminals IGA and IGB through diodes D1 and D2. The supply voltage is divided by resistors to produce a reference voltage ref, which is chosen to be slightly higher than the constant voltage Vcc1 mentioned above. In the present embodiment, Vcc1 is outputted at about 5 V, and the reference voltage ref is chosen to be on the order of 7 V. The comparator COMP1 compares the constant voltage Vcc1 against the reference voltage ref. If the magnitude of the constant voltage Vcc1 is normal (Vcc1 < ref), the comparator COMP1 outputs a voltage of a low level. When the constant voltage Vcc1 has a magnitude equal to or greater than the reference voltage ref, the comparator COMP1 outputs a voltage of a high level. The output from the comparator COMP1 is inverted before it is input to AND circuits AND1 and AND2. The output S1 from the first microprocessor 1 and the output S2 from the second microprocessor 2 are similarly inverted before they are input to AND circuits AND1 and AND2. The output S1 from the first microprocessor 1 assumes a high level when the occurrence of an abnormality is determined within the first microprocessor 1, and assumes a low level otherwise. The output S2 from the second microprocessor 2 assumes a high level when the occurrence of an abnormality is determined within the second microprocessor 2, and assumes a low level otherwise. Accordingly, the output S3 from the AND circuit AND1 and the output S4 from the AND circuit AND2 assume a low level when the magnitude of the constant voltage Vcc1 rises abnormally high, when the occurrence of an abnormality is determined by the first microprocessor 1 or when the occurrence of an abnormality is determined by the second microprocessor 2. Referring to Fig. 8, when the signal S3 assumes a low level, the first relay 7 is switched to the backup microprocessor 3. When the signal S4 assumes a low level, the second relay 8 is switched to the backup microprocessor 3. Whenever the magnitude of the constant voltage Vcc1, the first and the second microprocessor 1, 2 are all normal, both the signals S3 and S4 assume a high level. When the signal S3 assumes a high level, the first relay 7 is switched to the first microprocessor 1, and when the signal S4 assumes a high level, the second relay 8 is switched to the first microprocessor 1.

As a consequence, when the magnitude of the constant voltage Vcc1 and the functioning of the first and the second microprocessor 1, 2 are all normal, the first and the second motor driver 5, 6 respond to the bank of phase switching signals L and the pulse width modulation signal PWM from the first microprocessor 1 to rotate the motors M1, M2.

In the event an abnormality occurs within the system, the first and the second motor deriver 5, 6 respond to the bank of phase switching signals L3 and the pulse width modulation signal PWM3 from the backup microprocessor 3 to rotate the motors M1, M2. In this manner, the motor control is maintained by the backup microprocessor 3 in the event an abnormality occurs within the system. Such motor control can be maintained even when the magnitude of the constant voltage Vcc1 is abnormal since the backup microprocessor 3 is fed from a power supply which feeds the constant voltage Vcc2. In the event the constant voltage Vcc2 is abnormal, the first microprocessor 1 takes over the motor control. When the signal S3 or S4 is switched to its low level, the relays 75, 76 are turned off for a given time interval thereafter by the motor brake generator 67, 68, whereby the motor M1, M2 is braked and comes to a stop. Subsequently, the motor is returned to its neutral position by the backup microprocessor 3.

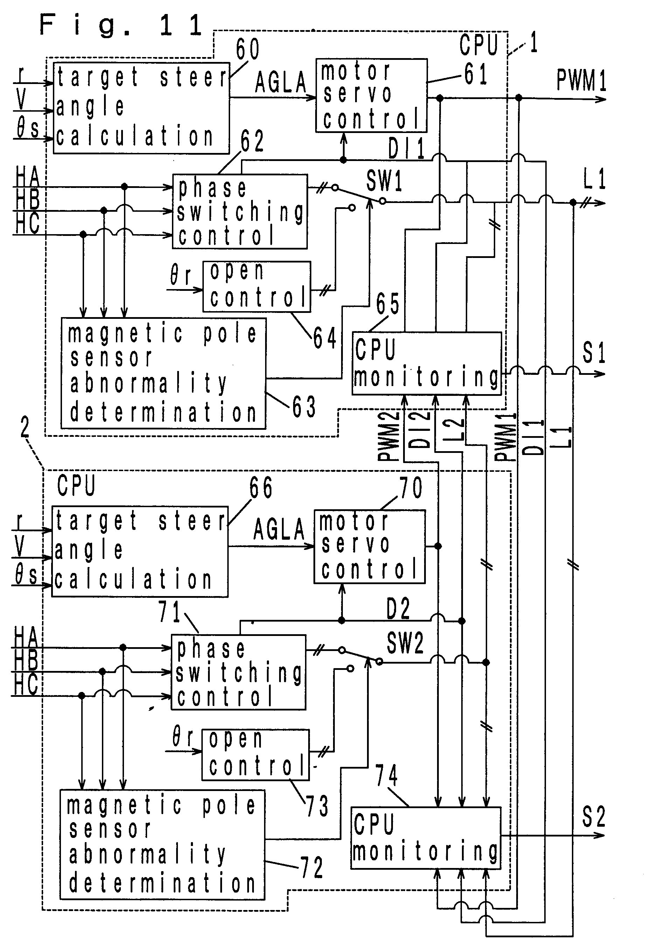

The functioning of the first and the second microprocessor 1, 2 is illustrated in Fig. 11. Considering the control function of the first microprocessor 1, which is depicted in terms of a block diagram, it comprises a target steer angle calculation 60, a motor servo control 61, a phase switching control 62, determination of an abnormality of the magnetic pole sensor 63, an open control 64, second microprocessor monitoring/output 65 and switch SW1. Similarly, the control function of the second microprocessor 2 includes a target steer angle calculation 66, a motor servo control 70, phase switching control 71, determination of abnormality of the magnetic pole sensor 72, open control 73, the second microprocessor monitoring 74 and switch SW2.

The function of the first microprocessor 1 will be described in detail. The target steer angle calculation 60 determines a target steer angle AGLA from the yaw rate r, vehicle speed V, and steering angle θs. While not shown, the vehicle speed V is determined from outputs V1 and V2 from the two vehicle speed sensors 22, 23. A mean value of the two vehicle speed values may be chosen as the vehicle speed V, or the maximum value of the two vehicle speed values may be chosen as the vehicle speed V. By detecting the vehicle speed through two circuits, an abnormality occurring with the vehicle speed sensor can be detected. In addition, while not shown, the front wheel steer angle θs is determined from outputs θf1, θf2 from the two front wheel steer angle sensors 17, 20. Normally, a potentiometer is used for the first front wheel steer angle sensor 17, but it is to be noted that a potentiometer has a rough accuracy. When a rotary encoder is used as the second front wheel steer angle sensor 20, the steer angle can be detected with good precision, but an initial steer angle cannot be detected. Accordingly, immediately after the power supply is turned on, a value detected by the first front wheel steer angle sensor 17 is chosen as an initial steer angle, and subsequently, pulses produced by the sensor 20 are counted up/down so that its count represents the steering angle θs.

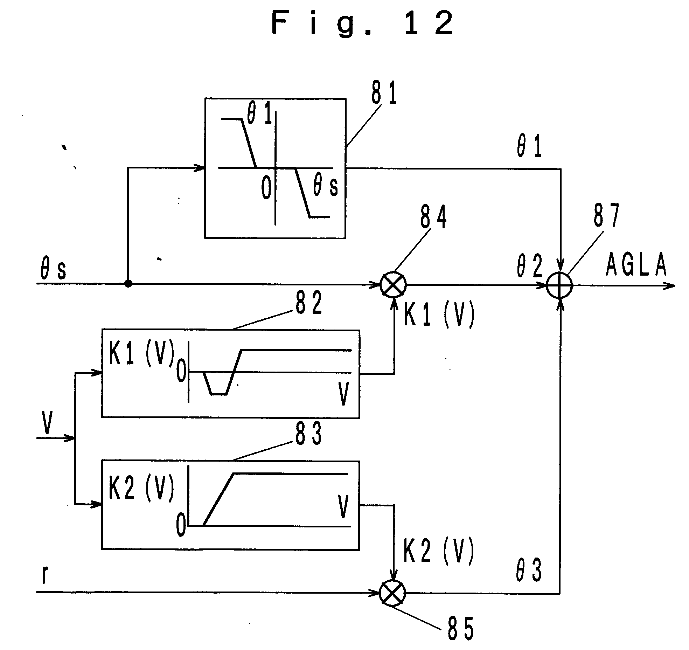

Fig. 12 shows signal processing within the target steer angle calculation 60. A steering gain setting 82 and a yaw rate gain setting 83 set up a steering gain K1 (V) and a yaw rate gain K2 (V), respectively, in accordance with the magnitude of the vehicle speed V. A multiplication 84 produces a product of the steering gain K1 (V) and the steering angle θs to provide a steering variable θ2. A multiplication 85 produces a product of the yaw rate gain K2 (V) and the yaw rate r to provide a yaw rate variable θ3. On the other hand, a reversed phase variable setting 81 determines a reversed phase variable θ1 from the steering angle θs. An addition 87 adds the reversed phase variable θ1, the steering variable θ2 and the yaw rate variable θ3 to provide the target steer angle AGLA.

In the present embodiment, an arrangement is made for the reversed phase setting 81 such that whenever the steering angle θs is equal to or less than about 200°, the reversed phase variable θ1 is chosen to be equal to 0, and the given gain is multiplied only when the steering angle θs exceeds about 200°. In this manner, when a driver turns the steering wheel 19 through an increased stroke, the target steer angle AGLA assumes a reversed phase, allowing the vehicle to be turned in a small radius. It is to be noted that the steering wheel 19 cannot be turned more than 200° during the time when the vehicle is running at high speeds, and hence the rear wheel cannot assume a reversed phase at such time.

In the steering gain setting 82, the steering gain K1 (V) is chosen to be equal to 0 for a vehicle speed of or less than 30 km/h, for example, to assume a negative value for a vehicle speed of 30 ~ 40 km/h, and to assume a positive value for a vehicle speed of 40 km/h or greater. In the yaw rate gain setting 83, the yaw rate gain K2 (V) is chosen to be equal to 0 for a vehicle speed of 30 km/h or less, and to assume a positive value for a vehicle speed of 30 ~ 40 km/h or greater. It is to be understood that specific values depend on the variety of the vehicle. As a consequence of this, when the vehicle is running at low speeds of about 30 km/h, the steer angle variable for the rear wheels only comprises the reversed phase variable θ1, but as the vehicle speed becomes higher, in-phase control takes place in accordance with the steering angle and the yaw rate. The purpose of causing the steering gain K1 (V) to assume a negative value for a vehicle speed on the order of 30 ~ 40 km/h is to provide a reversed phase control momentarily when steering during the running of the vehicle, followed by an in-phase control (the control returns to the in-phase when the yaw rate begins to appear), thus providing a phase reversal control. It is to be understood that the yaw rate variable θ3 may be limited to a given value in order to facilitate recognition of the steering effect by the driver.

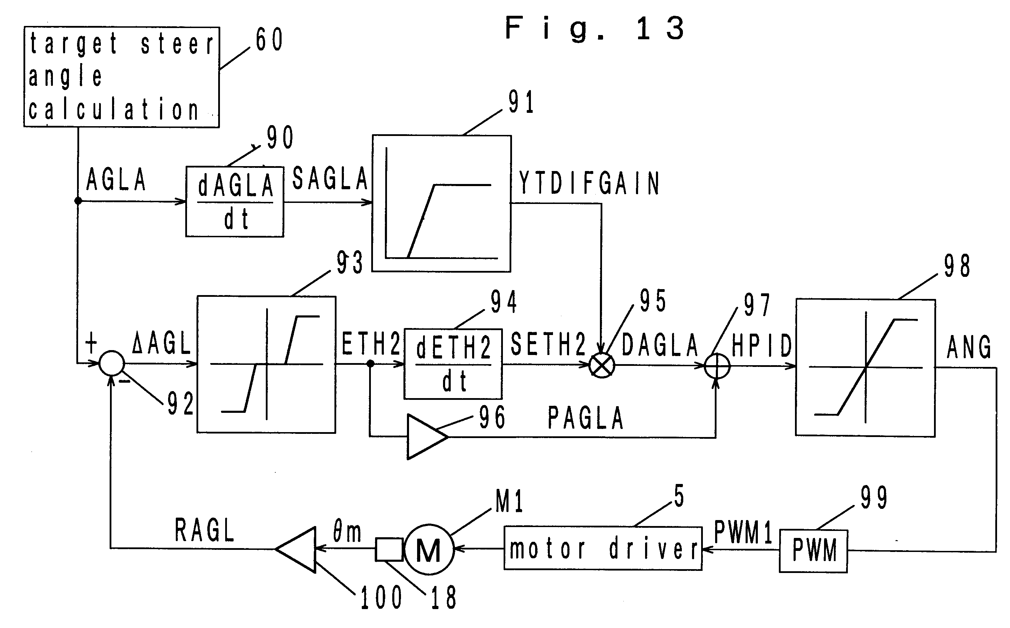

Fig. 13 shows the processing function of the motor servo control 61 shown in Fig. 11 in block diagram. A differentiation 90 differentiates the target steer angle AGLA to provide a derivative SAGLA. A differentiation gain setting 91 determines a differentiation gain YTDIFGAIN from the derivative SAGLA of the target steer angle. The differentiation gain YTDIFGAIN is derived from the absolute magnitude of the derivative SAGLA. When the absolute magnitude of the derivative SAGLA is equal to or less than 4 deg/sec, the differentiation gain is chosen to be equal to 0, and when the absolute magnitude of the derivative SAGLA is equal to or greater than 12 deg/sec, the differentiation gain is chosen to be equal to 4. When the absolute magnitude of the derivative SAGLA is from 4 to 12 deg/sec, the differentiation gain assumes a value between 0 and 4. While not shown, the rear wheel steer angle θm is obtained from the output signals HA, HB, HC from the magnetic pole sensor 18 and the output θr from the rear wheel steer angle sensor 21. Normally, a potentiometer is used as the rear wheel steer angle sensor 21, but it is to be noted that a potentiometer provides a rough accuracy. The detection of a steer angle by counting up/down any change in the level of the pulse signals HA, HB, HC produced by the magnetic pole sensor 8 provides a high accuracy, but fails to detect an initial steer angle. Accordingly, immediately after the power supply is turned on, a value detected by the rear wheel steer angle sensor 21 is used as an initial steer angle, and subsequently the pulses produced by the sensor 18 are counted up/down, thus producing a count which represents the rear wheel steer angle θm. The steer angle θm is fed through a buffer 100 to a subtraction 92 as an actual steer angle RAGL. In the subtraction 92, the actual steer angle RAGL is subtracted from the target steer angle AGLA to derive a steer angle deviation ΔAGL, which is processed by a steer angle dead zone setting 93 where a steer angle deviation ETH2 is processed as being equal to 0 whenever the absolute magnitude of the steer angle deviation ΔAGL is equal to or less than a given value E2PMAX, thus ceasing the steering when the magnitude of the steer angle deviation ΔAGL is small.

The steer angle deviation ETH2 obtained is fed to a proportionality 96 and a differentiation 94. In the proportionality 96, the steer angle deviation ETH2 is multiplied by a given gain of protionality to provide a proportional term PAGLA. In the differentiation 94, the steer angle deviation ETH2 is differentiated to derive a steer angle deviation derivative SETH2. The steer angle deviation derivative SETH2 and the differentiation gain YTDIFGAIN are multiplied together in a multiplication 95 to derive a differential term DAGLA. The proportional term PAGLA and the differential term DAGLA are added together in an addition 97 to derive a steer angle value HPID, which is then limited by a deviation steer angle limiter 98. The deviation steer angle limiter 98 delivers a variable ANG which is proportional to the steer angle value HPID, and limits the variable to a range within ±1.5 deg. The variable ANG is converted into a pulse width modulated signal by a pulse width modulator 99, and is then fed to the first motor driver 5. The first motor driver 5 energizes the motor M1 with pulses in accordance with the pulse width modulated signal. The motor M1 is subject to a servo control in this manner while the steer angle deviation is subject to a P and D control. The differentiation gain of the differential term is modified in accordance with the derivative of the target steer angle. The differentiation gain will be equal to 0 when the derivative of the target steer angle is small, whereby the control assumes a P control. It is to be understood that an integrated term may be added to the PD ontrol mentioned above. The speed of rotation of the motor M1 varies with a fluctuation in the supply voltage, and accordingly, the variable ANG may be corrected in accordance with a battery voltage which is separately determined.

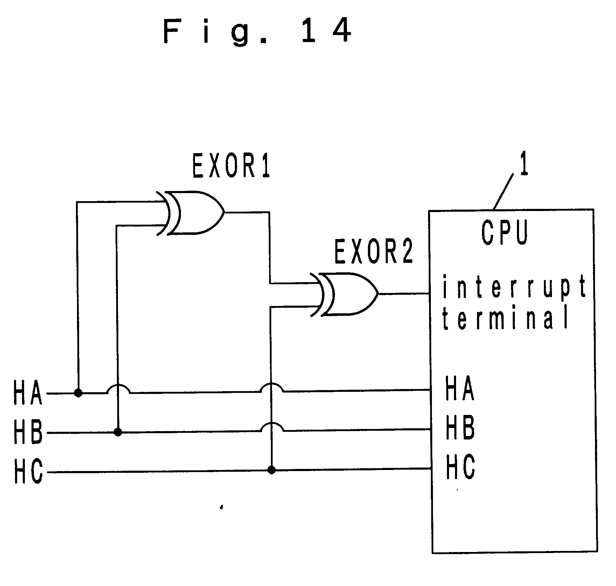

As shown in Fig. 14, an interrupt terminal and normal input terminals of the first microprocessor 1 are used to input the magnetic pole sensor signals HA, HB, HC. The magnetic pole sensor signals HA, HB are also fed to an exclusive OR circuit EXOR1. An output from the exclusive OR circuit EXOR1 and the magnetic pole sensor HC are input to another exclusive OR circuit EXOR2. Whenever there is a change in one of the magnetic pole sensor signals HA, HB, HC, there occurs a change in the output from the exclusive OR circuit EXOR2.

When there is a change in one of the magnetic pole sensor signals HA, HB, HC, the first microprocessor 1 executes a magnetic pole sensor signal edge interrupt routine, which recognizes a change in the magnetic pole sensor signal and performs the function of the magnetic pole sensor abnormality determination 63 shown in Fig. 11.

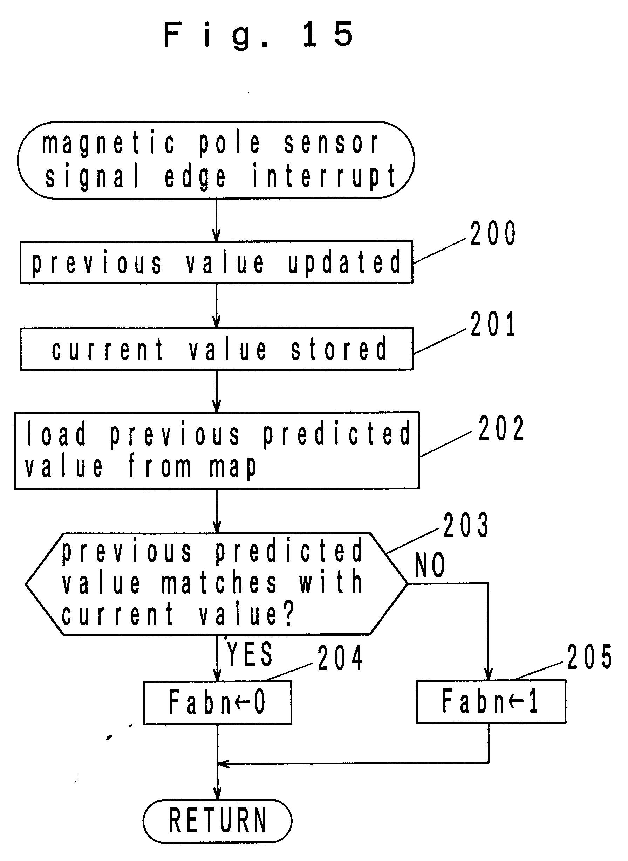

Referring to Fig. 15, the level (either H or L) of each of the magnetic pole sensors which are stored as current values are renewed as previous values at step 200. At next step 201, the signal levels at the input terminals to which the magnetic pole sensor signals HA, HB, HC are applied are read, and are stored as current values. At step 202, previous predicted values are read out of the map shown in Table 2. The magnetic pole sensor 18 is constructed so that one of the magnetic pole sensor signals HA, HB, HC changes in a sequential order. Accordingly, one of the signals HA, HB, HC will have changed its polarity between the previous value and the current value. The previous predicted values shown in the map of Table 2 contain all possible status for the current values. Specifically, assuming that the current values are such that (HA, HB, HC) = (L, L, H), the previous predicted values are (H, L, H) or (L, H, H). At step 203 shown in Fig. 15, the previous predicted values are compared against the actual previous values. If the magnetic pole sensor 18 is properly functioning, the previous predicted values should match the previous values. If a match is found, an abnormality flag Fabn is cleared at step 204. If a match is not found, the abnormality flag Fabn is set to 1 at step 205.

This completes the magnetic pole sensor edge interrupt routine, and during any subsequent pass, the abnormality flag Fabn which is set to 1 indicates the occurrence of some abnormality with the magnetic pole sensor 18.

Table 2

| current value | previous predicted value |
|---------------|--------------------------|
| (L, L, H) | (H, L, H) or (L, H, H) |
| (H, L, H) | (H, L, L) or (L, L, H) |
| (H, L, L) | (H, H, L) or (H, L, H) |
| (H, H, L) | (L, H, L) or (H, L, L) |
| (L, H, L) | (L, H, H) or (H, H, L) |
| (L, H, H) | (L, L, H) or (L, H, L) |

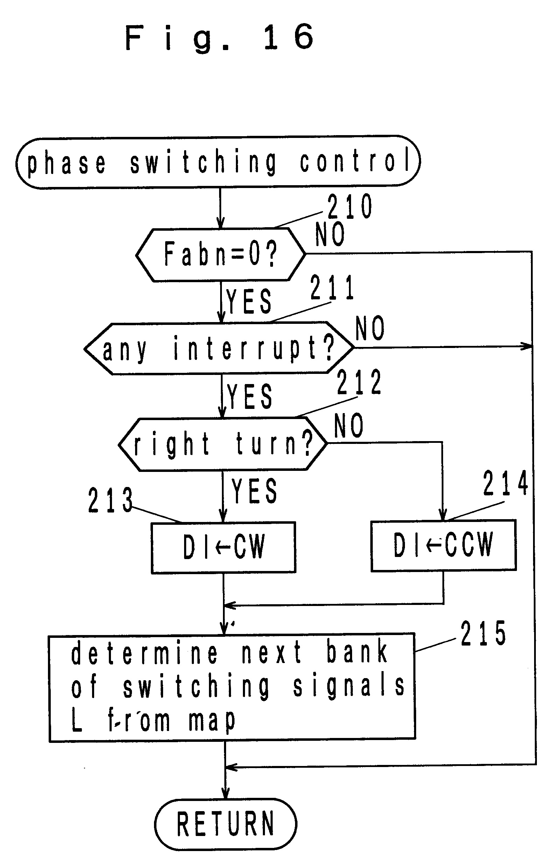

Fig. 16 shows the detail of the phase switching control 62 shown in Fig. 11. At step 210, the abnormality flag Fabn is examined, and if it is set to 1, the subsequent operation is skipped, namely, the phase switching control routine is not executed when the magnetic pole sensor 18 involves some abnormality. If Fabn = 0, an examination is made at step 211 to see if the magnetic pole sensor signal edge interrupt operation has been conducted. If the interrupt operation has been conducted, data representing CW is loaded into a direction flag DI, if a clockwise rotation is to be performed while data representing CCW is loaded into the direction flag DI when a counter-clockwise rotation is to be performed (steps 212 to 214). The direction of rotation is determined by the positive or negative polarity of the steer angle value HPID (Fig. 13). If HPID > 0, the direction flag DI is equal to CCW, and if HPID > O, the direction flag DI is equal to CW. The bank of phase switching signals L is set up in accordance with a map shown in Table 3.

The bank of phase switching signals L includes six bits, and each bit is defined as indicated in Table 4 below. Each bit is capable of assuming a high level (H) or a low level (L). At step 215, a bank of phase switching signals which is to be delivered next is determined on the basis of the current bank of phase switching signals and the status of the direction flag DI. Assume, for examle, that the current values are (LA11, LB11, LC11, LA21, LB21, LC21) = (H, L, L, L, H, L) and DI = CW (clockwise rotation). Then, the next bank will be (H, L, L, L, L, H). The bank of phase switching signals L which is thus determined is referred to as a bank of phase switching signals L1 in the first microprocessor 1 and as a bank of phase switching signals L2 in the second microprocessor 2. Where the control cycle has a short period of time, the phase switching control routine may be conducted within the magnetic pole sensor signal edge interrupt routine. During the set-up of the direction flag, if the steer angle value HPID is equal to 0, the phase switching is interrupted by setting (LA11, LB11, LC11, LA21, LB21, LC21) = (L, L, L, L, L, L).

Table 3

| current value | DI = CW | DI = CCW |
|---|---|---|
| (H, L, L, L, H, L) | (H, L, L, L, L, H) | (L, L, H, L, H, L) |
| (L, L, H, L, H, L) | (H, L, L, L, H, L) | (L, L, H, H, L, L) |
| (L, L, H, H, L, L) | (L, L, H, L, H, L) | (L, H, L, H, L, L) |
| (L, H, L, H, L, L) | (L, L, H, H, L, L) | (L, H, L, L, L, H) |
| (L, H, L, L, L, H) | (L, H, L, H, L, L) | (H, L, L, L, L, H) |
| (H, L, L, L, L, H) | (L, H, L, L, L, H) | (H, L, L, L, H, L) |

Table 4

| | bit 1 | bit 2 | bit 3 | bit 4 | bit 5 | bit 6 |
|---|---|---|---|---|---|---|
| signal from 1st microprocessor | LA11 | LB11 | LC11 | LA21 | LB21 | LC21 |
| signal from 2nd microprocessor | LA12 | LB12 | LC12 | LA22 | LB22 | LC22 |

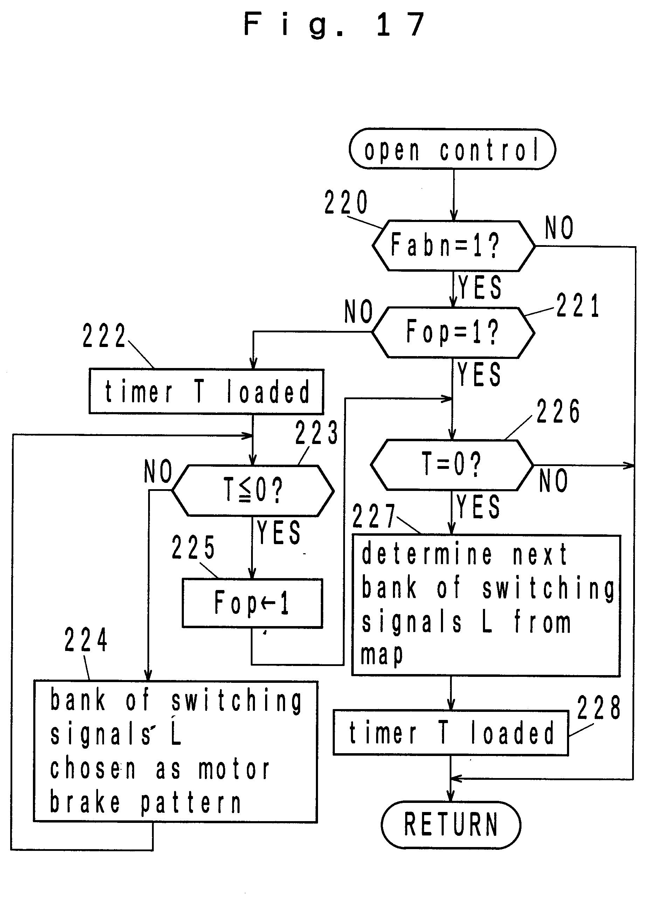

Fig. 17 shows the detail of the open control 64 shown in Fig. 11. At step 220, the abnormality flag Fabn is examined, and if it is equal to 0, the subsequent operation is skipped, namely, the open control routine is not executed when the magnetic pole sensor 18 is operating normally. Thus, the phase switching control routine is executed when the magnetic pole sensor 18 is normal, and the open control routine is executed when the magnetic pole sensor 18 involves some abnormality. During the open control routine, an open control on flag Fop1 and a timer T are used. A given length of time is loaded into the timer T, which then sequentially decrements its count, and eventually reaches to a count of 0. The flag Fop1 is initially set to 0. At step 221, the status of the flag Fop1 is examined, and if this flag is found to be equal to 0, a given length of time (for example, one second) is loaded into the timer T at next step 222, and the bank of phase switching signals L is set up to a motor brake pattern at step 224 until the timer T reaches 0 or less. The motor brake pattern is as follows:

$$(LA11, LB11, LC11, LA21, LB21, LC21) = (L, L, L, H, H, H)$$

$$(LA12, LB12, LC12, LA22, LB22, LC22) = (L, L, L, H, H, H)$$

When the given time interval has passed, the open control on flag Fop1 is set to 1 at step 225. Since then the timer T is equal to 0 or less, a next bank of phase switching signals L is determined at step 227 in accordance with a map shown in Table 5, followed by loading the timer T again at next step 228. Since the operation proceeds from step 226 to the execution of step 227 only when the timer T is equal to 0 or less, it follows that the step 227 is executed at a given time interval which is loaded into the timer T. The next values which are determined at step 227 depend on results of comparison of the current bank of phase switching signals L and the rear wheel steer angle θr and a given value A1 which are delivered from the rear wheel steer angle sensor 21. A1 is chosen to be a value close to 0 (for example, 0.5°). By way of example, if the current bank of phase switching signals L is given as follows:

(LA11, LB11, LC11, LA21, LB21, LC21) = (H, L, L, L, H, L)

and the rear wheel steer angle θr is equal to -1°, the next bank of phase switching signals L will be (H, L, L, L, L, H).

The map shown in Table 5 is chosen so that a negative value of rear wheel steer angle results in a right turn while a positive value of the rear wheel steer angle results in a left turn. In either instance, the map is designed to bring the absolute value of the rear wheel steer angle close to 0. When the absolute value of the rear wheel steer angle becomes equal to or less than the given value A1, the phase switching pattern will be (L, L, L, L, L, L) . The motor 12 comes to a stop for this pattern. Accordingly, during the open control routine, the bank of phase switching signals L is controlled so that the rear wheel steer angle becomes equal to 0 or the neutral position is returned.

Table 5

| current value | next value | | |
|---|---|---|---|
| | θr < -A1 | -A1 ≦ θr ≦ A | θr > A1 |
| (H,L,L,L,H,L) | (H,L,L,L,L,H) | (L,L,L,L,L,L) | (L,L,H,L,H,L) |
| (L,L,H,L,H,L) | (H,L,L,L,H,L) | (L,L,L,L,L,L) | (L,L,H,H,L,L) |
| (L,L,H,H,L,L) | (L,L,H,L,H,L) | (L,L,L,L,L,L) | (L,H,L,H,L,L) |
| (L,H,L,H,L,L) | (L,L,H,H,L,L) | (L,L,L,L,L,L) | (L,H,L,L,L,H) |
| (L,H,L,L,L,H) | (L,H,L,H,L,L) | (L,L,L,L,L,L) | (H,L,L,L,L,H) |
| (H,L,L,L,L,H) | (L,H,L,L,L,H) | (L,L,L,L,L,L) | (H,L,L,L,H,L) |

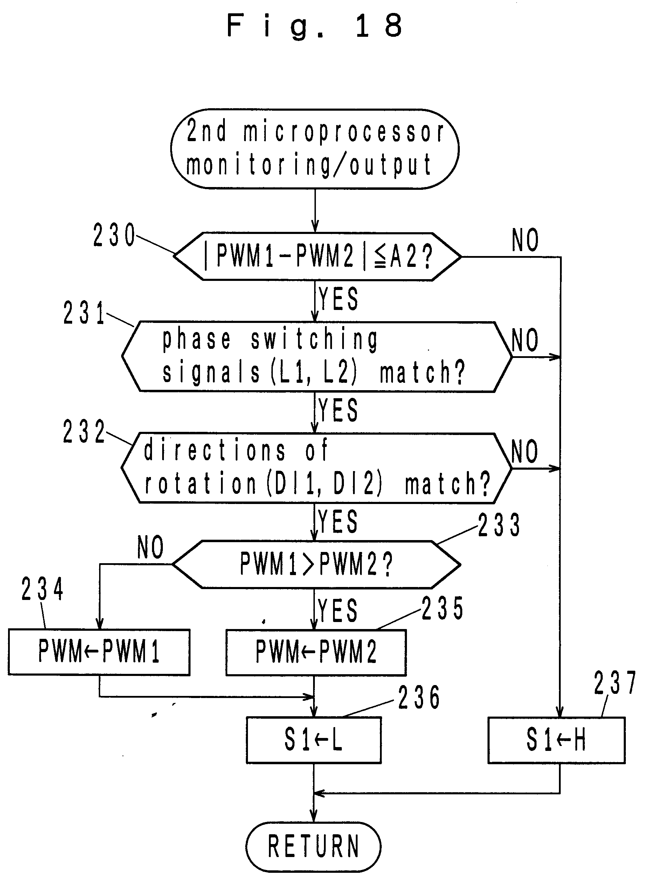

Fig. 18 shows the detail of the second microprocessor monitoring/output 65 shown in Fig. 11. The first microprocessor 1 contains the pulse width modulated signal (PWM1), the phase switching signals (the bank L1) and the direction of rotation (DI1) which it has calculated by itself. It also obtains the pulse width modulated signal (PWM2), the phase switching signals (the bank L2) and the direction of rotation (DI2) which are calculated by the second microprocessor 2, through a communication therefrom. Any abnormality in the first or the second microprocessor 1, 2 is detected by comparing these signals against each other. Initially, at step 230, the absolute value of a difference between the pulse width modulated signals PWM1 and PWM2 is calculated and is examined to see if it is less than a given value A2, which is predetermined from errors of calculation which are possible for the first and the second microprocessor 1, 2. At step 231, an examination is made to see if the phase switching signals match, and at step 232, an examination is made to see if the directions of rotation coincides. If it is determined as a result of such examinations that a difference between the pulse width modulated signals is small, the phase switching signals match each other and the direction of rotation coincides with each other between the first and the second microprocessor 1, 2, it is determined that both the first and the second microprocessor 1, 2 are normal, whereupon the signal S1 is brought to a low level at step 236. If a mismatch or non-coincidence is found in any instance, the signal S1 is brought to a high level at step 237. When the signal S1 assumes a high level, the selector 4 mentioned above drives the relays to switch the first and the second relay 7, 8 from the first microprocessor 1 to the backup microprocessor 3. When it is determined that both the first and the second microprocessor 1, 2 are normal, a comparison is made at step 233 to see which of the pulse width modulated signals PWM1 and PWM2, calculated by the first and the second microprocessor, 1, 2, respectively, is greater. At subsequent steps 234 and 235, the smaller of PWM1 and PWM2 is chosen or renewed to the pulse width modulated signal PWM. When the step 233 is executed for the next time, the comparison takes place against this renewed pulse width modulated signal PWM.

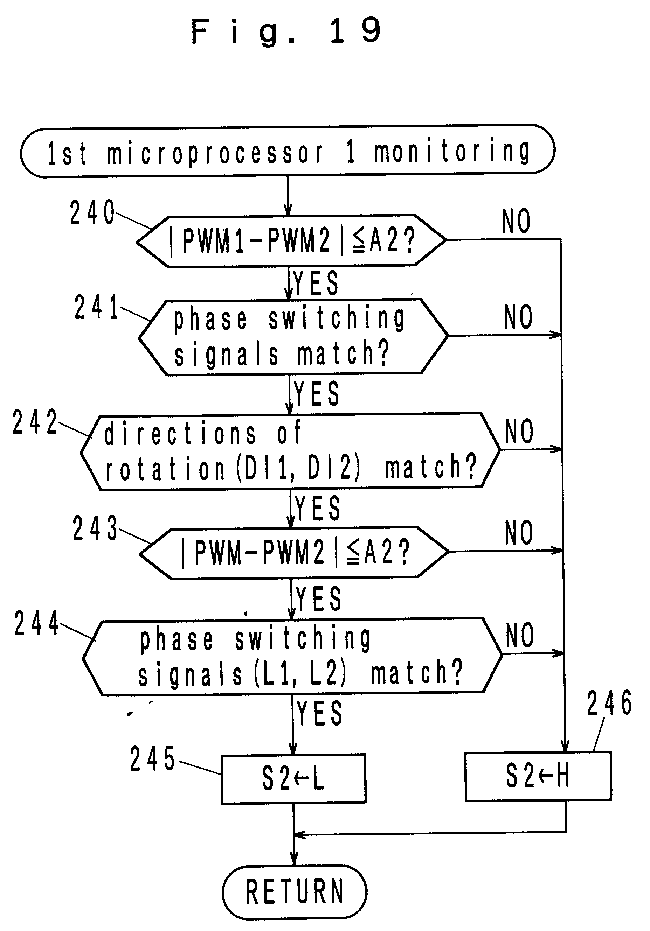

Fig. 19 shows the detail of the first microprocessor monitoring 74 shown in Fig. 11. Steps 240 to 242, which are decision blocks, are identical to steps 230 to 232 used in the second microprocessor monitoring 65 by the first microprocessor 1. If it is determined as a result of execution of these decision blocks that a difference between the pulse width modulated signals is small, the phase switching signals match and the directions of rotation coincide between the first and the second microprocessor 1, 2, it is concluded that both the first and the second microprocessor 1, 2 are normal. Also a comparison of the pulse width modulated signal PWM being delivered and the calculated pulse width modulated signal PWM2 (step 243) and a comparison of the bank of phase switching signals L which is being delivered and the calculated bank of phase switching signals L2 (step 244) take place.

If a difference between the pulse width modulated signal PWM which is being delivered and the calculated pulse width modulated signal PWM2 is within a given value, and the bank of phase switching signals L which are being delivered match the calculated bank of phase switching signals L2, it is determined that the output port of the first microprocessor 1 is functioning normally. When both of them are normal, the signal S2 is brought to its low level at step 245. If the difference exceeds the given value or the mismatch is found, the signal S2 is brought to its high level. When the signal S2 assumes a high level, the selector 4 drives the relays, thus switching the first relay 7 and the second relay 8 from the first microprocessor 1 to the backup microprocessor 3.

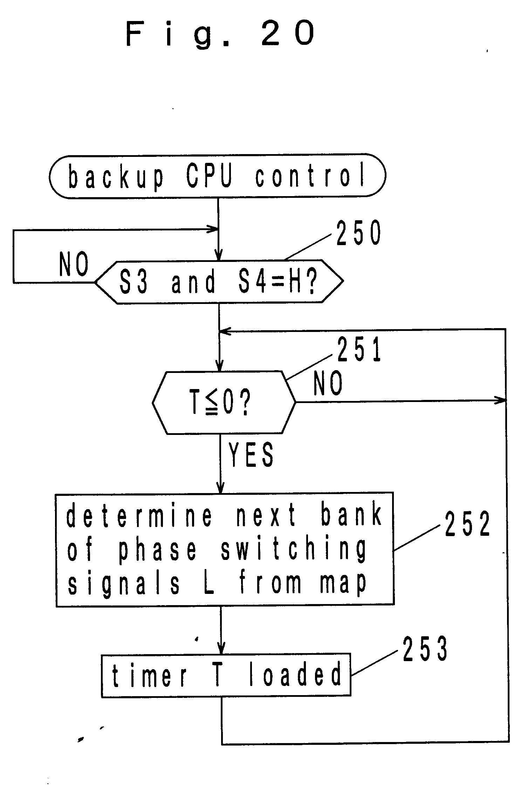

Fig. 20 shows the operation of the backup microprocessor 3. At initial step 250, the microprocessor 3 waits for both the signals S3 and S4 to assume a high level. When the both signals S3 and S4 assume a high level, it waits for the timer T to reach 0 or less at step 251. The timer T is decremented at a given period from a given value which is initially loaded. When the timer T reaches 0 or less, a next phase switching pattern from the map shown in Table 5 is loaded at step 252, followed by loading a given time interval (for example, one second) into the timer T at step 253. Since the step 252 is executed only when it is found at step 251 that the timer T is equal to 0 or less, it will be seen that the step 252 is subsequently executed at a given time interval which is set up in the timer T. At step 252, the next values are determined in accordance with results of comparison against the current phase switching pattern and the rear wheel steer angle Or delivered from the rear wheel steer angle sensor 21 as well as the given value A1. In this instance, the pattern shown in the Table 5 used in connection with the open control 64 is utilized without change. Accordingly, in the phase switching control by the backup microprocessor 3, the bank of phase switching signals L is controlled to bring the rear wheel steer angle to 0 or to return them to their neutral positions. It is to be noted that when the signals S3 and S4 assume a high level, the motors M1 and M2 are braked for a given time interval by the hardware including the brake signal generators 67, 68 and the third and the fourth relay 75, 76. Subsequently, the motor 12 is driven by the backup microprocessor 3 for returning to the neutral position.

In the present embodiment, a sensor which senses the rotation of the brushless motor 12 comprises the magnetic pole sensor 18 incorporating Hall IC's, but it may be replaced by an encoder such as a light pulse sensor utilizing a light emitting diode.

In the above description of the present embodiment, it has been assumed that the motor 12 includes electric coils connected in two circuits associated with two motor drivers, thus virtually assuming a split control for the motors M1 and M2. The purpose of splitting the motor in this manner is to enable a return to the neutral position in the event a failure occurs in one of the motors or the motor drivers, by driving the other. If it is determined that a failure occurred within the system associated with the motor M1, for example, when an abnormal current is detected within the motor driver 5 associated with the motor M1, the relay drive circuit 79 opens the relay 77, and the motor M2 is driven to return the rear wheel steering system to its neutral position. In the event the system associated with the motor M2 has failed, the relay drive circuit 80 opens the relay 78, and the motor M1 is driven to return the rear wheel steering system to its neutral position. In these instances, while the output level drops because the drive takes place with only one motor, a return to the neutral position is realized without including any clutch or return spring in the rear wheel steering system.

In the present embodiment, any abnormality involved with the first and the second microprocessor 1, 2, serving as control units, are determined by a comparison of the pulse width modulated signals, the phase switching signals and the directions of rotation, which are calculated by the first and the second microprocessor 1, 2, respectively, against each other. However, the detection of any abnormality may also incorporate a comparison of an input signal such as vehicle speed signal, calculated by the respective microprocessors.

As described, the embodiment includes the motor 12 (M1 + M2), the rear wheel steering mechanism 11 which is controlled by the rotation of the motor, the motor drivers 5, 6 which drive the motor for rotation, the first microprocessor 1 serving as primary control means capable of controlling the motor drivers, the second microprocessor serving as abnormality detecting means which detects any abnormality involved with the first microprocessor 1, as well as switching means, namely, the brake signal generators 67, 68 and the third and the fourth relays 75, 76, for interrupting the delivery of an output from the first microprocessor to the motor driver and for delivering a brake signal to the motor driver in the event of occurrence of any abnormality with the first microprocessor 1. In this manner, in the event an abnormality occurs with the first microprocessor 1, the motor ceases to rotate, and the steer angle of the rear wheels is maintained, whereby the use of a clutch and a return spring can be dispensed with and any over-steering which might occur in response to an abnormality of a control unit can be prevented. Because a return spring is avoided, a drive torque required of the motor may be small, and hence the motor can be reduced in size. In addition, the steering rate can be increased.

With the described embodiment, the rear wheel steering mechanism 11 includes the operating shaft 25 which is translated laterally to steer the rear wheels and which extends through the rotating shaft 27 of the brushless motor, and accordingly, the mechanism 11 is relatively long in the direction in which the operating shaft 25 extends (in the lateral direction), but is short in the orthogonal direction (reduced width), thus resulting in a slim construction.

Since the operating shaft (25) extends through the hollow rotating shaft (27) of the electric motor, the steering apparatus according to the invention may have its size (width) orthogonal to the operating shaft (25) minimized, and any resulting reduction in the output torque may be compensated for by an increased length of the electric motor which extends in the direction in which the operating shaft (25) extends, with consequence that the steering apparatus results in a small diameter construction about the operating shaft (25).

In the trapezoidal thread coupling (27sf/26sm), a relative rotation between the female thread (27sf) and the male thread (26sm) causes the both to translate relative to each other in their axial direction, resulting in the steering operation mentioned above. If a relative force is applied in such direction between the both (27sf/26sm), none of them (27sf/26sm) rotate, and when one of them (27sf/26sm) is fixed in the axial direction, both of them (27sf/26sm) do not translate in such direction. Accordingly, in the steering apparatus according to the invention, if a force is applied from wheels to the operating shaft (25) in a direction in which the operating shaft (25) is translatable, there occurs no increase in the load upon the electric motor. Accordingly, a torque which is required for purpose of steering may be small and still a translation of the operating shaft (25) which might result from the application of a force from wheels to the operating shaft (25) when the electric motor is deenergized is blocked by the trapezoidal thread coupling (27sf/26sm).

**Claims**

1. A steering apparatus for a vehicle including

   an operating shaft (25) for driving rear wheels (15, 16) of the vehicle for steering;
   a brushless electric motor (12) having a hollow rotating shaft (27) through which the operating shaft (25) extends axially;
   a thread coupling (26, 27) for converting a rotating power from said electric motor (12) into a linear driving force in a direction in which said operating shaft (25) extends to drive said operating shaft (25) in the direction;
   and an electrical controller (9) including a motor driver (5, 6) which energizes said electric motor (12) and a controller (1, 2, 3) which applies an energization control signal to said motor driver (5, 6);
   characterized in that
   said thread coupling (26, 27) includes a trapezoidal female thread (27sf) integral and concentric with said hollow rotating shaft (27) and a trapezoidal male thread (26sm) integral and/concentric with said operating shaft (25) and threadably engaged with said trapezoidal female thread (27sf) and blocks a rotation of said hollow rotating shaft (27) due to a translation of said operating shaft (25) which might result from an application of a force from said rear wheels (15, 16).

2. A steering apparatus for vehicle according to Claim 1 in, which the brushless electric motor (12) comprises a rotor formed by a magnet (42) fixedly mounted on the hollow rotating shaft (27) and having N- and S-poles which are alternately distributed in the circumferential direction; a stator including a cylindrical yoke (43) which surrounds the outer peripheral surface of the rotor (42), a plurality of magnetic poles (43a) which project from the cylindrical yoke (43) toward the magnet (42), and a plurality of electric coils (44a - 44f) which excite the magnetic poles (43a); and a magnetic pole sensor for detecting an angle of relative rotation of the rotor with respect to the stator.

3. A steering apparatus for vehicle according to Claim 2 in which there are m x n electric coils (44a - 44f) to enable m-phase n-circuits to be independently energized where $m \geqq 3$ and $n \geqq 2$.

4. A steering apparatus for vehicle according to Claim 3 in which the motor driver (5, 6) includes n motor drivers (5, 6) for energizing the electric coils of the respective circuits.

5. A steering apparatus for vehicle according to Claim 4 in which the electrical controller (9) includes n-sets of switching means (75, 76) for selectively interrupting the supply of energization control signals from the controller (1, 2, 3) to each of n motor drivers.

6. A steering apparatus for vehicle according to Claim 5 in which the controller (1, 2, 3) includes a first microprocessor (1) for applying an energization control signal to the motor driver (5, 6), a second microprocessor for monitoring the operation of the first microprocessor (1) and for producing an abnormality signal (S2, S4) upon detection of any abnormal operation, and a third microprocessor for producing an energization control signal in response to the abnormality signal; and in which the electrical controller (9) includes switching means (7, 8) for selectively applying energization control signals produced by the first microprocessor (1) and by the third microprocessor (3) to the motor driver (5, 6) through the n-sets of switching means (75, 76).

**Patentansprüche**

1. Lenkgerät für ein Fahrzeug mit

   einer Betätigungswelle (25) zum Antreiben von Hinterrädern (15, 16) eines Fahrzeugs zum Lenken,

einem bürstenlosen Elektromotor (12) mit einer hohlen Drehwelle (27), durch die sich die Betätigungswelle (25) axial erstreckt,

einer Gewindekupplung (26, 27) zum Umwandeln einer Drehkraft von dem Elektromotor (12) in eine lineare Antriebskraft in einer Richtung, in der sich die Betätigungswelle (25) erstreckt, um die Betätigungswelle (25) in dieser Richtung anzutreiben, und

einer elektrischen Steuereinrichtung (9), die einen Motortreiber (5, 6), der den Elektromotor (12) erregt, und eine Steuereinrichtung (1, 2, 3), die ein Erregungssteuersignal an dem Motortreiber (5, 6) anlegt, umfaßt,

**dadurch gekennzeichnet, daß**

die Gewindekupplung (26, 27) ein Trapezinnengewinde (27sf), das mit der hohlen Drehwelle (27) einstückig und konzentrisch ist, und ein Trapezaußengewinde (26sm), das einstückig und konzentrisch zu der Betätigungswelle (25) ist und mit dem Trapezinnengewinde (27sf) im Gewindeeingriff steht, umfaßt und eine Umdrehung der hohlen Drehwelle (27) aufgrund einer Verschiebung der Betätigungswelle (25), die aus einem Aufbringen einer Kraft von den Hinterrädern (15, 16) herrührt, blockiert.

2.  Lenkgerät für ein Fahrzeug gemäß Anspruch 1, wobei

    der bürstenlose Elektromotor (12) folgende Bauteile aufweist:
    einen Rotor, der durch einen Magnet (42) ausgebildet ist, der an der hohlen Drehwelle (27) feststehend montiert ist und Nord- und Südpole hat, die in der Umfangsrichtung abwechselnd verteilt sind,
    einen Stator, der ein zylindrisches Joch (43), das die Außenumfangsfläche des Rotors (42) umgibt, eine Vielzahl von Magnetpolen (43a), die von den zylindrischen Joch (43) zu dem Magnet (42) hin vorstehen, und eine Vielzahl an elektrischen Spulen (44a - 44f), die die Magnetpole (43a) anregen, umfaßt, und
    einen Magnetpolsensor zum Erfassen eines Winkels einer Relativdrehung des Rotors in bezug auf den Stator.

3.  Lenkgerät für ein Fahrzeug gemäß Anspruch 2, wobei

    m x n elektrische Spulen (44a - 44f) vorhanden sind, um zu ermöglichen, daß n-Schaltkreise mit jeweils m-Phasen unabhängig erregt werden, wobei $m \geq 3$ und $n \geq 2$ ist.

4.  Lenkgerät für ein Fahrzeug gemäß Anspruch 3, wobei

    der Motortreiber (5, 6) n Motortreiber (5, 6) zum Erregen der elektrischen Spulen der jeweiligen Schaltkreise umfaßt.

5.  Lenkgerät für ein Fahrzeug gemäß Anspruch 4, wobei

    die elektrische Steuereinrichtung (9) n Gruppen von Schalteinrichtungen (75, 76) zum wahlweisen Unterbrechen der Lieferung von Erregungssteuersignalen von der Steuereinrichtung (1, 2, 3) zu jedem der n Motortreiber umfaßt.

6.  Lenkgerät für ein Fahrzeug gemäß Anspruch 5, wobei

    die Steuereinrichtung (1, 2, 3) einen ersten Mikroprozessor (1) zum Anlegen eines Erregungssteuersignals an den Motortreiber (5, 6), einen zweiten Mikroprozessor zum Überwachen des Betriebs des ersten Mikroprozessors (1) und zum Erzeugen eines Anormalitätssignals (S2, S4) beim Erfassen eines anormalen Vorgangs, und einen dritten Mikroprozessor zum Erzeugen eines Erregungssteuersignals im Ansprechen auf das Anormalitätssignal umfaßt und
    die elektrische Steuereinrichtung (9) eine Schalteinrichtung (7, 8) zum wahlweisen Anlegen von Erregungssteuersignalen, die von dem ersten Mikroprozessor (1) und von dem dritten Mikroprozessor (3) erzeugt worden sind, an den Motortreiber (5, 6) durch die n-Gruppen der Schalteinrichtung (75, 76) umfaßt.

**Revendications**

1.  Dispositif de direction pour véhicule, comprenant

    un arbre de commande (25) destiné à entraîner les roues arrière (15, 16) du véhicule afin de les braquer,
    un moteur électrique sans balais (12) comprenant un arbre tournant creux (27) au travers duquel l'arbre de commande (25) s'étend axialement,

un accouplement fileté (26, 27) destiné à convertir la puissance d'entraînement en rotation provenant dudit moteur électrique (12) en une puissance d'entraînement linéaire suivant la direction dans laquelle ledit arbre de commande (25) s'étend afin d'entraîner ledit arbre de commande (25) dans cette direction,

et un contrôleur électrique (9) comprenant un circuit d'attaque de moteur (5, 6) qui alimente ledit moteur électrique (12) et un circuit de commande (1, 2, 3) qui applique un signal de commande d'alimentation audit circuit d'attaque de moteur (5, 6),

caractérisé en ce que

ledit accouplement fileté (26, 27) comprend un filetage femelle trapézoïdal (27sf) solidaire dudit arbre tournant creux (27) et concentrique à celui-ci, ainsi qu'un filetage mâle trapézoïdal (26sm) solidaire dudit arbre de commande (25) et concentrique à celui-ci, et en prise par filetage avec ledit filetage femelle trapézoïdal (27sf), et empêche une rotation dudit arbre tournant creux (27) due à une translation dudit arbre de commande (25) qui pourrait résulter d'une application d'une force à partir desdites roues arrière (15, 16).

2. Dispositif de direction pour véhicule selon la revendication 1, dans lequel ledit moteur électrique sans balais (12) comprend un rotor formé par un aimant (42) monté de façon fixe sur l'arbre tournant creux (27) et comportant des pôles Nord et Sud qui sont répartis en alternance suivant la direction de la circonférence, un stator comprenant une culasse cylindrique (43) qui entoure la surface périphérique externe du rotor (42), une pluralité de pôles magnétiques (43a) qui font saillie à partir de la culasse cylindrique (43) en direction de l'aimant (42), et une pluralité de bobinages électriques (44a à 44f) qui excitent les pôles magnétiques (43a), ainsi qu'un capteur de pôle magnétique destiné à détecter un angle de rotation relative du rotor par rapport au stator.

3. Dispositif de direction pour véhicule selon la revendication 2, dans lequel sont présents m x n bobinages électriques (44a à 44f) afin de permettre que n circuits à m phases soient alimentés indépendamment, ou $m \geq 3$ et $n \geq 2$.

4. Dispositif de direction pour véhicule selon la revendication 3, dans lequel le circuit d'attaque de moteur (5, 6) comprend n circuits d'attaque de moteur (5, 6) destinés à alimenter les bobinages électriques des circuits respectifs.

5. Dispositif de direction pour véhicule selon la revendication 4, dans lequel le contrôleur électrique (9) comprend n ensembles de moyens de commutation (75, 76) destinés à interrompre sélectivement l'application de signaux de commande d'alimentation à partir du circuit de commande (1, 2, 3) à chacun des n circuits d'attaque de moteur.

6. Dispositif de direction pour véhicule selon la revendication 5, dans lequel le circuit de commande (1, 2, 3) comprend un premier microprocesseur (1) destiné à appliquer un signal de commande d'alimentation au circuit d'attaque de moteur (5, 6), un second microprocesseur destiné à surveiller le fonctionnement du premier microprocesseur (1) et à produire un signal d'anomalie (S2, S4) lors de la détection de tout fonctionnement anormal et un troisième microprocesseur destiné à produire un signal de commande d'alimentation en réponse au signal d'anomalie, et dans lequel le contrôleur électrique (9) comprend un moyen de commutation (7, 8) destiné à appliquer sélectivement les signaux de commande d'alimentation produits par le premier microprocesseur (1) et par le troisième microprocesseur (3) au circuit d'attaque de moteur (5, 6) par l'intermédiaire des n ensembles de moyens de commutation (76, 76).

# Fig. 1

# Fig. 2

27

27sf

26sm

26

E2

# Fig. 3

42

43

43a

44

25

27

# Fig. 4

# Fig. 5

# Fig. 6

# Fig. 7

Fig. 8

EP 0 637 537 B1

Fig. 9

# Fig. 10

# Fig. 11

Fig. 12

Fig. 13

EP 0 637 537 B1

# Fig. 14

# Fig. 15

```
    ┌─────────────────────────┐
    │  magnetic pole sensor   │
    │ signal edge interrupt   │
    └─────────────────────────┘
                 │
                 ▼
    ┌─────────────────────────┐     200
    │  previous value updated │
    └─────────────────────────┘
                 │
                 ▼
    ┌─────────────────────────┐     201
    │   current value stored  │
    └─────────────────────────┘
                 │
                 ▼
    ┌─────────────────────────┐     202
    │  load previous predicted│
    │  value from map         │
    └─────────────────────────┘
                 │
                 ▼
         ╱───────────────╲          203
        ╱ previous predicted╲    NO
       ╱  value matches with ╲──────────┐
       ╲  current value?     ╱          │
        ╲───────────────────╱           │
                 │ YES    204           │
                 ▼                      ▼
         ┌──────────────┐        ┌──────────────┐
         │   Fabn←0     │        │   Fabn←1     │  205
         └──────────────┘        └──────────────┘
                 │                      │
                 │◄─────────────────────┘
                 ▼
            ┌──────────┐
            │  RETURN  │
            └──────────┘
```

# Fig. 16

phase switching control

210 Fabn=0? NO

YES 211

any interrupt? NO

YES 212

right turn? NO

213 YES 214

DI←CW | DI←CCW

determine next bank of switching signals L from map — 215

RETURN

# Fig. 17

open control

220 — Fabn=1? — NO

YES

NO — Fop=1? — 221

YES

222 — timer T loaded

223 — NO — T≤0?

YES

225 — Fop←1

226 — T=0? — NO

YES

227 — determine next bank of switching signals L from map

224 — bank of switching signals L chosen as motor brake pattern

228 — timer T loaded

RETURN

# Fig. 18

```
        ╭─────────────────────╮
        │  2nd microprocessor │
        │  monitoring/output  │
        ╰─────────────────────╯
                   │
                   ▼
230 ──⟨ |PWM1-PWM2|≦A2? ⟩────── NO ──┐
                   │ YES              │
                   ▼                  │
231 ──⟨ phase switching         ⟩── NO ──┤
       ⟨ signals(L1,L2) match? ⟩         │
                   │ YES              │
                   ▼                  │
232 ──⟨ directions of           ⟩── NO ──┤
       ⟨ rotation(DI1,DI2) match?⟩       │
                   │ YES              │
                   ▼                  │
        NO ──⟨ PWM1>PWM2? ⟩── 233     │
         │         │ YES   235        │
         ▼         ▼                  │
234 ┌─────────┐ ┌─────────┐          │
    │PWM←PWM1 │ │PWM←PWM2 │          │
    └─────────┘ └─────────┘          │
         │         │                  │
         └────┬────┘                  │
              ▼  236            237   │
         ┌─────────┐         ┌─────────┐
         │  S1←L   │         │  S1←H   │
         └─────────┘         └─────────┘
              │                  │
              └────────┬─────────┘
                       ▼
                  ╭─────────╮
                  │ RETURN  │
                  ╰─────────╯
```

# Fig. 19

```
        ( 1st microprocessor 1 monitoring )
                         │
                         ▼
240 ─┐  ┌─────────────────────────┐   NO
     └──│   |PWM1-PWM2|≦A2?        │──────────┐
        └─────────────────────────┘          │
                    │ YES                     │
241 ─┐  ┌─────────────────────────┐   NO      │
     └──│   phase switching        │─────────→│
        │   signals match?         │          │
        └─────────────────────────┘          │
                    │ YES                     │
242 ─┐  ┌─────────────────────────┐   NO      │
     └──│   directions of          │─────────→│
        │   rotation(DI1, DI2) match?│         │
        └─────────────────────────┘          │
                    │ YES                     │
243 ─┐  ┌─────────────────────────┐   NO      │
     └──│   |PWM-PWM2|≦A2?         │─────────→│
        └─────────────────────────┘          │
                    │ YES                     │
244 ─┐  ┌─────────────────────────┐   NO      │
     └──│   phase switching        │─────────→│
        │   signals(L1, L2) match? │          │
        └─────────────────────────┘          │
                    │ YES                     │ 246
245 ─┐  ┌───────────┐          ┌───────────┐  │
     └──│   S2←L     │          │   S2←H     │◄─┘
        └───────────┘          └───────────┘
              │                      │
              └──────────┬───────────┘
                         ▼
                   ( RETURN )
```

# Fig. 20

backup CPU control

250 — NO — S3 and S4=H?

251 — T≦0? — NO

YES

252 — determine next bank of phase switching signals L from map

253 — timer T loaded

# F i g. 21